(19) Europäisches Patentamt
European Patent Office
Office européen des brevets

(11) **EP 2 097 304 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(21) Anmeldenummer: **07866233.5**

(22) Anmeldetag: **11.12.2007**

(51) Int Cl.:
**B60W 30/18** (2006.01)     **B60W 10/02** (2006.01)
**B60W 10/06** (2006.01)     **B60W 10/08** (2006.01)
**B60W 10/10** (2006.01)     **B60W 10/12** (2006.01)

(86) Internationale Anmeldenummer:
**PCT/EP2007/010778**

(87) Internationale Veröffentlichungsnummer:
**WO 2008/071381 (19.06.2008 Gazette 2008/25)**

(54) **VERFAHREN ZUR STEUERUNG DES HYBRIDANTRIEBES EINES KRAFTFAHRZEUGES UND STEUERSYSTEM**

METHOD FOR CONTROLLING THE HYBRID DRIVE OF A MOTOR VEHICLE AND CONTROL SYSTEM

PROCÉDÉ DE COMMANDE DE L'ENTRAÎNEMENT HYBRIDE D'UN VÉHICULE AUTOMOBILE, ET SYSTÈME DE COMMANDE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.12.2006   AT 85606 U**

(43) Veröffentlichungstag der Anmeldung:
**09.09.2009   Patentblatt 2009/37**

(73) Patentinhaber: **Magna E-Car Systems GmbH & Co OG**
**8041 Graz (AT)**

(72) Erfinder:
• **MORI, Peter**
  **8041 Graz (AT)**
• **SCHÖBERL,Theodor**
  **8041 Graz (AT)**
• **MARTIN, Helmut**
  **8041 Graz (AT)**
• **KRAMER, Florian**
  **8041 Graz (AT)**
• **BUROW, Clemens**
  **8041 Graz (AT)**
• **HEIN, Jan-Erik**
  **8041 Graz (AT)**
• **POSCH, Manfred**
  **8041 Graz (AT)**

(74) Vertreter: **Schupp, Bernhard et al**
**Magna International (Germany) GmbH**
**Kurfürst-Eppstein-Ring 11**
**63877 Sailauf (DE)**

(56) Entgegenhaltungen:
WO-A-2006/034520     AT-U1- 9 756
DE-A1-102004 004 867     DE-B3- 10 353 256
US-A- 5 270 930     US-A1- 2004 060 751
US-A1- 2004 070 270

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Steuern des Hybridantriebs eines Kraftfahrzeuges, welcher Hybridantrieb folgende Komponenten umfasst:

eine Verbrennungskraftmaschine, ein Achsantriebsgetriebe, mindestens eine elektrische Maschine, mindestens eine Kupplung, mindestens einen Energiespeicher, und mindestens eine angetriebene Achse. Der zu steuernde Hybridantrieb besteht im einfachsten Fall aus einer Verbrennungskraftmaschine, einer in Serie angeordneten als Motor und Generator betreibbaren elektrischen Maschine, einem einstufigen (also nicht schaltbaren) Untersetzungsgetriebe und Differential als Achsantriebsgetriebe für eine angetriebene Achse. Der zu steuernde Hybridantrieb kann aber auch mehrere elektrische Maschinen in komplexer Anordnung, mehrere Kupplungen und mehrere - insbesondere zwei - angetriebene Achsen umfassen.

In bekannten Steuerungen werden Fahrerwunsch und Kapazitäten der Drehmomentquellen und -senken (damit sind die elektrische Maschine und die Verbrennungskraftmaschine gemeint) in verzweigten und unübersichtlichen logischen Entscheidungsbäumen aufeinander abgestimmt, wobei in einem frühen Stadium der zur Erfüllung des Fahrerwunsches führende Modus gewählt und erst danach die Arbeitspunkte ermittelt und in der Folge die Ansteuersignale für die einzelnen Komponenten generiert werden. Schon dadurch ist es nicht möglich, die Kapazitäten aller Komponenten gleichzeitig optimal zu nutzen und diese auch noch in ihren wirtschaftlichsten und verschleißärmsten Arbeitspunkten zu betreiben. Dazu kommt im Falle eines Schaltgetriebes noch, dass auch der zu wählende Getriebegang in die Optimierung einzubeziehen ist. Mit einer derart verzweigten Logik ist eine Anpassung an fahrdynamische Erfordernisse nur schwer zu erreichen. Das ist besonders nachteilig, wenn eine Begrenzung des Radschlupfes erwünscht oder gar bei einem Fahrzeug mit zwei angetriebenen Achsen auch die Verteilung des Drehmomentes auf beide Achsen gesteuert werden soll.

Unter Modus ist hier und im Folgenden die Summe der Antriebskonstellationen und Betriebszustände der Komponenten zu verstehen, zum Beispiel: "Fahren mit Antrieb durch Verbrennungskraftmaschine", "Fahren mit elektrischem Antrieb", "Fahren mit gemischtem Antrieb", "Segeln", "Beschleunigen", "Laden der Batterie", "Bremsen mit Energierückgewinnung" etc. Wenn das System mehrere elektrische Maschinen, mehrere Kupplungen und zwei angetriebene Achsen aufweist, kommt noch eine Reihe weiterer Modi hinzu. Werden diesen Modi jeweils mit in Frage kommenden Getriebegängen verknüpft, entsteht eine noch größere Anzahl von Modi, die bis zu dreistellig sein kann.

Ein weiteres bei stark verzweigter Logik nur mit großem Aufwand zu lösendes Problem stellt der Übergang von einem Modus zum anderen dar. Gemäß der US 6,321,143 wird dieses Problem durch hierarchisch geordnete Prioritäten zwischen den einzelnen Modi und ein System von Fahnen (engl.: "flags") zu lösen versucht, deren Definition sehr kompliziert und deren Wirkung zweifelhaft ist.

Aus der WO 02/26520 A1 ist eine Steuerung eines Hybridantriebs der einfacheren Art bekannt, in der eine hierarchische Trennung der Festlegung des Soll-Betriebszustandes und der Verteilung der Drehmomentanforderung an die vor-Betriebszustandes und der Verteilung der Drehmomentanforderung an die vorhandenen Drehmomentquellen und -senken vorgenommen ist. Damit gelingt es, allerdings bei eingeschränkter Funktionalität, die Systemkomplexität zu senken. Dort ist auch ein Modus "Wirkungsgrad optimieren" vorgesehen, dieser optimiert aber nicht den Wirkungsgrad der gesamten Anordnung, sondern nur den Wirkungsgrad der Verbrennungskraftmaschine, die Wirkungsgrade und Einschränkungen der anderen Komponenten bleiben unberücksichtigt.

Die DE 10353256 B3 beschreibt verschiedene Hybridsysteme, wobei die Steuerung der Hybridsysteme jedoch nur in groben Zügen widergegeben wird.

Aus der US 2004/0060751 ist ein Steuerverfahren für ein Hybridsystem bekannt, welches besonders für Konfigurationen mit stufenlosem Getriebe ausgelegt ist. Dieses Steuerverfahren berücksichtigt ebenfalls nicht den Wirkungsgrad der gesamten Anordnung und ermittelt zudem keine zielführenden Modi aus einem dem Fahrerwunsch entsprechenden Drehmoment.

Es ist somit Aufgabe der Erfindung, ein Steuerverfahren und eine Steuerung für Hybridantriebe zu schaffen, die unter Vermeidung der oben angeführten Nachteile beziehungsweise durch Lösung der oben angeführten Probleme höchste Wirtschaftlichkeit, maximale Lebensdauer der Komponenten, hohen Fahrkomfort und die Möglichkeit bieten, allen fahrdynamischen Erfordernissen Rechnung zu tragen. Zum Fahrkomfort gehört auch ein zwangloser und sanfter Übergang von einem Modus zum anderen.

Das erfindungsgemäße Verfahren besteht in den in Anspruch 1 angeführten Schritten. Dadurch, dass zunächst sämtliche den Fahrerwunsch auch nur irgendwie erfüllenden Modi (im Falle eines Stufengetriebes einschließlich der möglichen Getriebegänge) herangezogen und quasi simultan "durchgespielt" werden, und die Auswahl erst in einem viel späteren Schritt erfolgt, steht für jeden Fahrerwunsch immer der optimale Modus zur Verfügung und ist ein Übergang zwischen den einzelnen Modi weitgehend ohne Fahnen oder Prioritäten möglich. Dadurch ist die Steuerung flexibler. Durch die Flexibilität sind fahrdynamische Eingriffe möglich und die Steuerung ist verschiedenen Fahrzeugen durch Wahl entsprechender Parameter und eingespeicherte Kennfelder leichter anpassbar.

Das simultane "Durchspielen" der Modi beinhaltet eine Ermittlung der Arbeitspunkte der einzelnen Komponenten unter Berücksichtigung von Betriebszustand und Systemzustand, sowohl des aktuellen als auch des dem Fahrerwunsch entsprechend einzustellenden Betriebszustandes. Weil der Arbeitspunkt der Komponenten für jeden Modus auf Grund fester gespeicherter Größen (die auch Grenzwerte sein können) beziehungsweise Kennfelder und des Systemzustandes ermittelt wird, können die Arbeitspunkte der einzelnen Komponenten optimal gewählt werden. So findet in den einzelnen Modi bereits vor der Auswahl eines bestimmten Modus eine Optimierung statt. Es werden sozusagen die bereits optimierten Modi bewertet und es wird der am besten bewertete ausgewählt. Dadurch wird die Kapazität aller Komponenten optimal genutzt. In dem ausgewählten Modus stehen dann für den Steuereingriff zur Einstellung der Komponenten die bereits bei der Optimierung der Arbeitspunkte ermittelten Größen in den Arbeitspunkten zur Verfügung. Das erleichtert und vereinfacht auch den Übergang von einem Modus zu einem anderen.

Wenn als Achsantriebsgetriebe ein Getriebe mit in Stufen veränderlicher Übersetzung (das sind die Getriebegänge) vorhanden ist, wird für die möglichen Modi entschieden, welche Getriebegänge für den dem Fahrerwunsch entsprechenden Betriebszustand in Frage kommen (Anspruch 2), wodurch sich die Anzahl der gemäß Anspruch 1 behandelten Modi entsprechend erhöht. Wenn die Übersetzung des Getriebes stufenlos, also kontinuierlich, variabel ist, wird die Übersetzung im erfindungsgemäßen Verfahren als zusätzliche Variable behandelt.

In einer vorteilhaften Ausgestaltung des Verfahrens werden bei der Ermittlung der Arbeitspunkte der in dem jeweiligen Modus einbezogenen Komponenten für alle Modi auch gleich die Wirkungsgrade der Komponenten ermittelt und werden diese Wirkungsgrade zu einem Gesamtwirkungsgrad für alle Modi (AMK bzw AMGK) zusammengeführt und in die Bewertung und Auswahl des Modus einbezogen (Anspruch 3 bzw 4, mit bzw ohne Stufengetriebe). Dadurch wird nicht nur der für die einzelnen Komponenten optimale Arbeitspunkt ermittelt, sondern auch der optimale Wirkungsgrad des gesamten Systems. Die Optimierung ist gewissermaßen zweistufig.

Für die Vorauswahl aller überhaupt in Frage kommenden Modi aus Fahrerwunsch, Betriebszustand und Systemzustand wird zumindest ein dem Fahrerwunsch entsprechendes erforderliches auf die Räder des Fahrzeuges zu übertragendes Drehmoment berechnet, was zur Einhaltung fahrdynamischer Vorgaben in einem Fahrdynamikregler geschieht (ohne solche Vorgaben direkt aus dem Fahrerwunsch), und anhand dieses Drehmomentes die Vorauswahl getroffen (Anspruch 5). Soferne es sich um ein Kraftfahrzeug mit zwei angetriebenen Achsen handelt, wird zunächst nur das gesamte zu übertragende Drehmoment ermittelt und dessen Verteilung auf die Achsen nur, wenn ein Traktionseingriff vorliegt, andernfalls erst in einem späteren Schritt (Anspruch 6). Ein Traktionseingriff wird zum Beispiel von einem Schlupfregler oder von einem Fahrdyamikregler vorgenommen.

Es ist empfehlenswert, unter anderem zur Erhöhung der Betriebssicherheit, zu überprüfen, ob alle für die in Frage kommenden Betriebsmodi erforderlichen Komponenten verfügbar, intakt und in dem erforderlichen Umfang funktionsfähig sind. Ist das für einen Modus nicht der Fall, wird der entsprechende Modus aus der weiteren Behandlung ausgeschieden (Anspruch 7). Dadurch, dass diese Überprüfung in einem frühen Stadium erfolgt, wird auch vermieden, dass zeitweise nicht zur Verfügung stehende Modi in der quasi simultanen Bearbeitung mitgeführt werden. An dieser Stelle lassen sich auch geeignete Notmaßnahmen einführen.

Die Berechnung der Wirkungsgrade in den einzelnen Modi in dem dem Fahrerwunsch entsprechenden Betriebszustand kann je nach Komplexität des Hybridantriebes und nach Erfordernissen in verschiedener Weise erfolgen. Dem gewünschten Betriebszustand entspricht ein von den angetriebenen Rädern zu übertragendes Drehmoment. Dem sind auf Grund der mechanischen Auslegung Grenzen gesetzt. Deshalb wird zunächst für jede Gangstufe unter Berücksichtigung gegebenenfalls dazwischen liegender Übersetzungen der Grenzwert des maximal übertragbaren Moments einzelner Komponenten berechnet. Die dem Fahrerwunsch entsprechenden Arbeitspunkte der einzelnen Maschinen werden unter Berücksichtigung von Grenzwerten von Moment und Leistung ermittelt und sodann für diese Arbeitspunkte mit Hilfe von gespeicherten Wirkungsgrad-Kennfeldern zunächst die einzelnen Wirkungsgrade in den Arbeitspunkten und daraus die Gesamtwirkungsgrade für die in Frage kommenden Modi ermittelt (Anspruch 8 bzw 9; 8 ohne, 9 mit Stufengetriebe).

Vorzugsweise sind die Grenzwerte für die Ermittlung des Arbeitspunktes Grenzwerte der Leistung der einzelnen Komponenten, die aus dem thermischen Zustand und aus Kennfeldern der jeweiligen Komponenten ermittelt werden (Anspruch 10) und/oder Grenzwerte der Leistungsaufnahmefähigkeit des Energiespeichers (ES) in seinem aktuellen Ladezustand, die aus Kennfeldern des Energiespeichers ermittelt werden (Anspruch 11). Die Grenzwerte sind Grenzwerte des übertragbaren und damit des zu übertragenden Drehmomentes, die aus dem Fahrerwunsch, dem Betriebszustand der Komponenten und dem Systemzustand ermittelt werden (Anspruch 12). Die Einführung dieser Grenzwerte führt zu weitgehend optimalen Arbeitspunkten und somit auch zu jeweils optimalen Wirkungsgraden, die in der Folge bewertet werden. Auch die Lage der Arbeitspunkte bezüglich der Grenzwerte wird in die Bewertung einbezogen (Anspruch 14). Beides trägt auch noch zur Maximierung der Lebensdauer der einzelnen Komponenten bei.

Für eine möglichst genaue Berechnung des Gesamtwirkungsgrades wird die an den Rädern des Fahrzeuges abgegebene mechanische Leistung zu dem Treibstoffverbrauch in Beziehung gesetzt. Dabei wird im Zugbetrieb die in der Batterie gespeicherte Energie aus der beim Laden der Batterie durchlaufenen Wirkungsgradkette von der Verbrennungskraftmaschine über die generatorisch betriebene elektrische Maschine (EM$_i$) und die zugehörige Leistungselektronik ermittelt und im Schubbetrieb nur die elektrische Ladeleistung berücksichtigt (Anspruch 13).

In Weiterbildung der erfindungsgemäßen Verfahrens können zur Bewertung der Modi noch weitere Kriterien herangezogen werden: Thermische Kriterien unter Einbeziehung des Systemzustandes und von Kennfeldern des thermischen Verhaltens der Maschinen (das sind die ein Moment erzeugenden Komponenten), welche auch bei der Ermittlung der Leistungsgrenzen der einzelnen Maschinen benutzt werden (Anspruch 15); und/oder Kriterien nach dynamischen Gesichtspunkten unter Einbeziehung des Fahrerwunsches und von Fahrzuständen, welche auch zur Festlegungen der Grenzmomente der einzelnen Maschinen zur Berechnung der Wirkungsgarde herangezogen werden (Anspruch 16). Man spricht hier von Dynamikmanagement.

Weiters kann zur Bewertung der Modi (AMK, AMGK) als Systemzustand der Zustand des Energiespeichers und gegebenenfalls dessen Kennfeld beim Laden und Entladen herangezogen wird, welches bei der Ermittlung der Leistungsgrenzen verwendet wird (Anspruch 17). Das kommt auch der Lebensdauer des Energiespeichers zugute. Auch Komfort - Gesichtspunkte (insbesondere beim Schalten der Getriebegänge) können in die Bewertung Eingang finden (Anspruch 18). Zur Gesamtbewertung werden dann die einzelnen Wertnoten zusammengeführt, die Modi nach der Bewertung sortiert und der Modus (AMGK*) mit der höchsten Wertnote ausgewählt (Anspruch 19).

Für die Ausgabe der dem ausgewählten Modus entsprechenden Sollwerte beziehungsweise Befehle für die Einstellung der von dem ausgewählten Modus betroffenen Komponenten kann auf die bei der Berechnung des Wirkungsgrades des ausgewählten Modus (AMGK) für den optimalen Arbeitspunkt ermittelten Daten zurückgegriffen werden (Anspruch 20 bzw 21, letzteres mit Stufengetriebe). Das spart Rechenzeit und trägt zum sanften Übergang von einem Modus in einen anderen bei.

Die Sollwerte beziehungsweise Befehle werden schließlich in Ansteuersignale für die Komponenten umgesetzt. (Anspruch 22). Bei zwei angetriebenen Achsen und wenn kein Traktionseingriff vorliegt, erfolgt die Momentenverteilung zwischen Vorderachse und Hinterachse im Zuge der Bestimmung des Arbeitspunktes und der Berechnung des Gesamtwirkungsgrades (Anspruch 23). Dadurch wird auch bei normaler Fahrt (wenn kein Traktionseingriff vorliegt) das Moment mit optimalem Wirkungsgrad auf die beiden angetriebenen Achsen verteilt.

Vorzugsweise stehen die aktuellen veränderlichen Größen (zum Beispiel Drehzahlen, Drehmomente, Temperaturen) sowie daraus berechnete Zwischengrößen (zum Beispiel Beschleunigung des Fahrzeuges, maximale Drehzahl der Verbrennungskraftmaschine) immer bei allen Schritten in dem Modul Systemzustandsanalyse zur Verfügung und ist aus ihm jederzeit abrufbar (Anspruch 24).

Die Erfindung betrifft auch ein Steuersystem für ein Kraftfahrzeug mit Hybridantrieb, welcher aus folgenden Komponenten besteht: einer Verbrennungskraftmaschine, einem Achsantriebsgetriebe - insbesondere einem Schaltgetriebe - mindestens einer elektrischen Maschine, mindestens einer Kupplung, mindestens einem Energiespeicher und mindestens einer angetriebenen Achse, wobei eine Fahrerwunschauswertung aus der Fahrpedalstellung, der Bremspedalstellung und einer der Fahrgschwindigkeit entsprechenden Größe (zum Beispiel der Raddrehzahl) den vom Fahrer zu erreichen gewünschten Betriebszustand (Beschleunigung, Verzögerung, Kickdown) erkennt.

Das Steuersystem besteht aus einer Reihe von Moduln, die bei einer Programmsteuerung gedachte Einheiten im Programmablauf sind, die ihrerseits wieder einzelne Blöcke (denen in den Figuren Kästchen zugeordnet sind) umfassen. Die besondere Beschaffenheit, Funktion und Anordnung der Moduln und Blöcke ermöglichen die Ausführung des erfindungsgemäßen Verfahrens. In welcher Weise und mit welcher Wirkung ist der Beschreibung des Systems anhand eines Ausführungsbeispieles zu entnehmen.

Im folgenden wird die Erfindung anhand von Abbildungen beschrieben und erläutert. Es stellen dar:

Fig. 1: Schema eines Hybridantriebs, auf den die erfindungsgemäße
Steuerung anwendbar ist, in seiner einfachsten Form,
Fig. 2: Schema eines komplexeren Hybridantriebes, auf den die
erfindungsgemäße Steuerung anwendbar ist,
Fig. 3: Tabelle der Modi des Hybridantriebes der Fig. 2,
Fig. 4: Grobschema der erfindungsgemäßen Steuerung,
Fig. 5: Blockschaubild der erfindungsgemäßen Steuerung,
geteilt in Fig. 5a und Fig. 5b,
Fig. 6: Blockschaubild zum Modul 1 in Fig. 5,
Fig. 7: Blockschaubild zum Modul 2 in Fig. 5,
Fig. 8: Blockschaubild zum Modul 3 in Fig. 5,
Fig. 9: Detail- Blockschaubild zu Fig. 8,
Fig.10: Blockschaubild zum Modul 4 in Fig. 5,
Fig.11: Blockschaubild zum Modul 5 in Fig. 5,
Fig.12: Blockschaubild zum Modul 7 in Fig. 5,
Fig. 13: Diagramm zu Modul 7,

Fig.14: Blockschaubild zum Modul 8 in Fig. 5,
Fig.15: Diagramme a,b,c zu Modul 8, Bestimmung Arbeitspunkt,
Fig.16: Schaubild zu Modul 8, Wirkungsgradberechnung,
Fig.17: Blockschaubild zum Modul 9 in Fig. 5,
Fig.18: Blockschaubild zum Modul 10 in Fig. 5,
Fig. 19: Blockschaubild zum Modul 11 in Fig. 5,
Fig.20: Blockschaubild zum Modul 13 in Fig. 5,
Fig.21: Blockschaubild zum Modul 15 in Fig. 5.

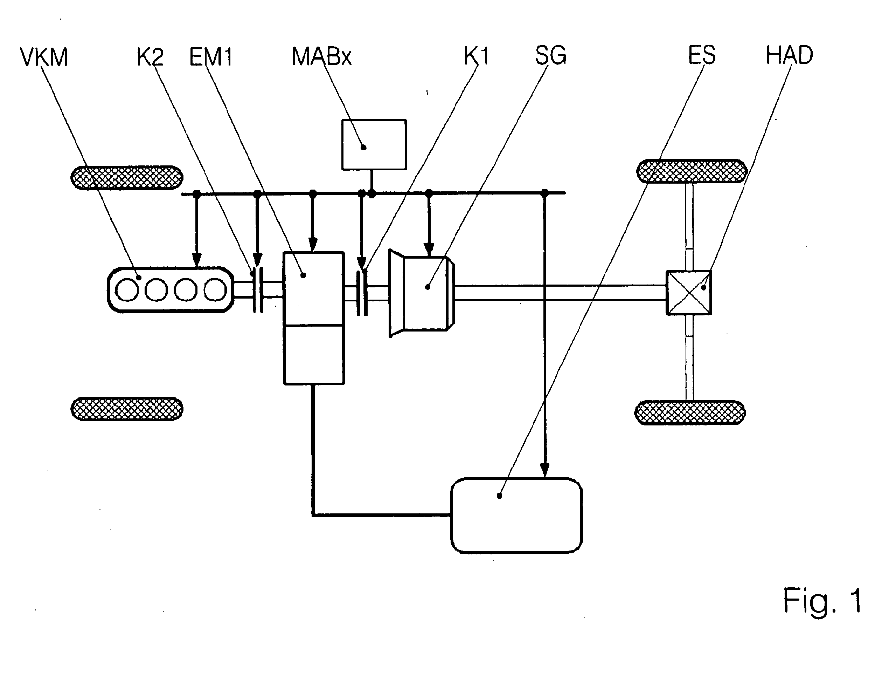

Ein einfacher, nach dem erfindungsgemäßen Verfahren steuerbarer Hybridantrieb nach **Fig. 1** besteht aus folenden Komponenten: einer Verbrennungskraftmaschine VKM, einer elektrischen Maschine EM1, einem Schaltgetriebe SG oder einem Getriebe mit fester Untersetzung, einem Hinterachsdifferential HAD und einem Energiespeicher ES - einer im folgenden einfach als Batterie bezeichneten Hochvoltbatterie hoher Kapazität oder dergleichen, sowie aus einer ersten Kupplung K1 zwischen der elektrischen Maschine EM1 und dem Schaltgetriebe SG, und einer zweiten Kupplung K2 zwischen der Verbrennungskraftmaschine VKM und der elektrischen Maschine EM1. Ein Steuergerät MABx ist über in Fig. 1 im einzelnen nicht bezeichnete Leitungen mit den Komponenten verbunden. Die Verbrennungskraftmaschine VKM und die elektrischen Maschinen EM1 sind im Folgenden unter dem Begriff Maschinen zusammengefasst.

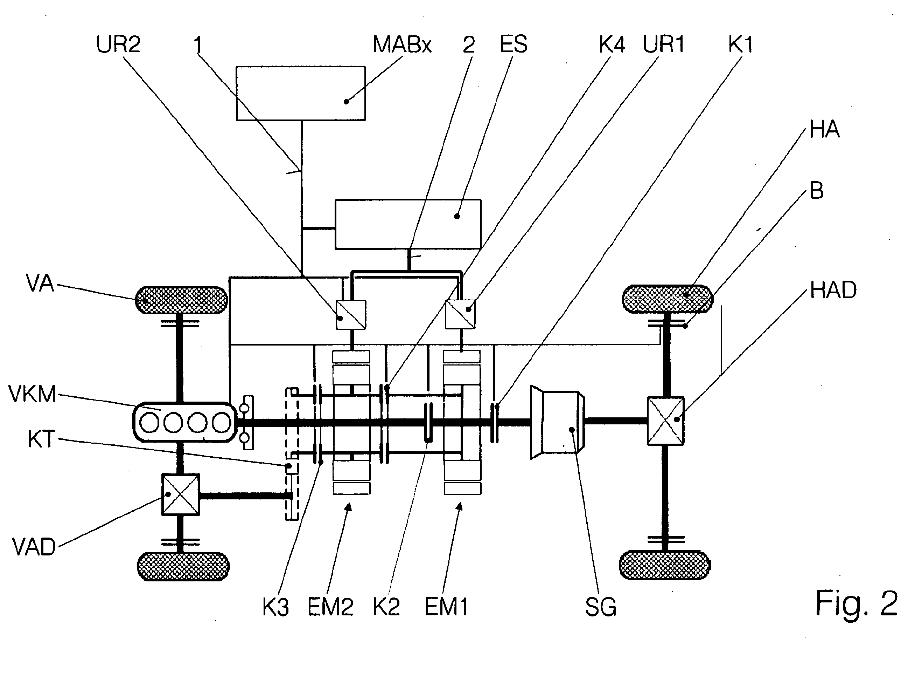

**Fig. 2** zeigt einen komplexen Hybridantrieb, auf den sich das weiter unten beschriebene Ausführungsbeispiel bezieht. Er besteht aus folenden Komponenten: einer Verbrennungskraftmaschine VKM, zwei elektrischen Maschinen EM1, EM2 mit ihren Umrichtern UR1, UR2, einem Schaltgetriebe SG, einem Hinterachsdifferential HAD und einem Vorderachsdifferential VAD für die beiden angetriebenen Achsen HA,VA und einem Energiespeicher ES. Eine der vier Radbremsen B ist nur an einem Rad angedeutet. Weiters ist vorgesehen: eine erste Kupplung K1 zwischen der elektrischen Maschine EM1 und dem Schaltgetriebe SG, eine zweite Kupplung K2 zwischen der Verbrennungskrafmaschine VKM und der elektrischen Maschine EM1, eine dritte Kupplung K3 zwischen der zweiten elektrischen Maschine EM2 und dem Abtrieb KT für den Antrieb der Vorderachse VA und eine vierte Kupplung K4 zwischen den beiden elektrischen Maschinen EM1,EM2. Ein Steuergerät MABx ist über summarisch mit 1 bezeichnete Leitungen mit den Komponenten verbunden. Summarisch mit 2 bezeichnete Leitungen dienen der Führung elektrischer Energie zwischen den elktrischen Maschinen EM1,EM2 und dem Energiespeicher ES. Mit Ausnahme der Kupplung K4 entspricht diese Anordnung weitgehend der im Österreichischen Gebrauchsmuster AT GM 8336 U1 beschriebenen.

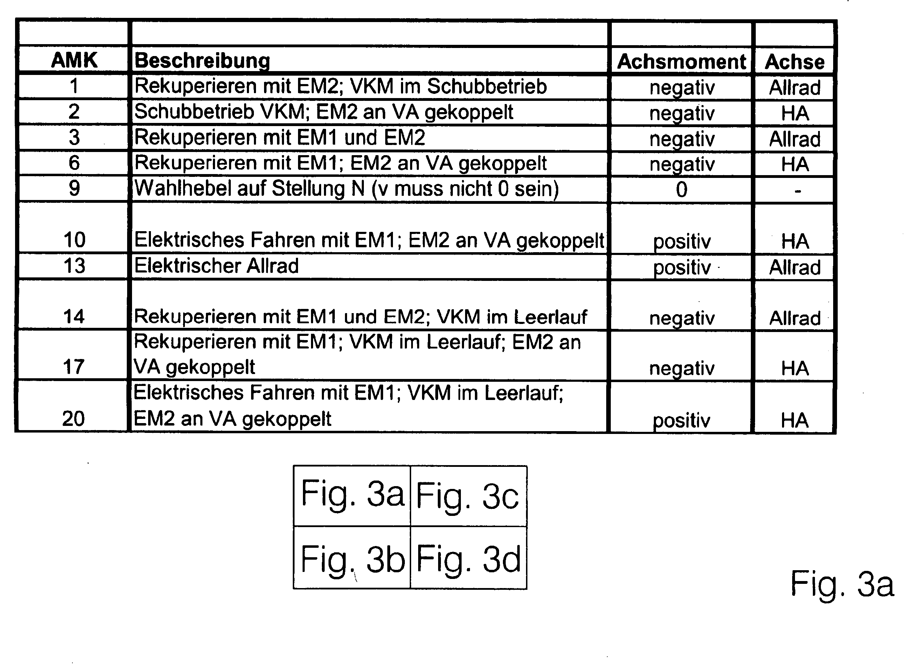

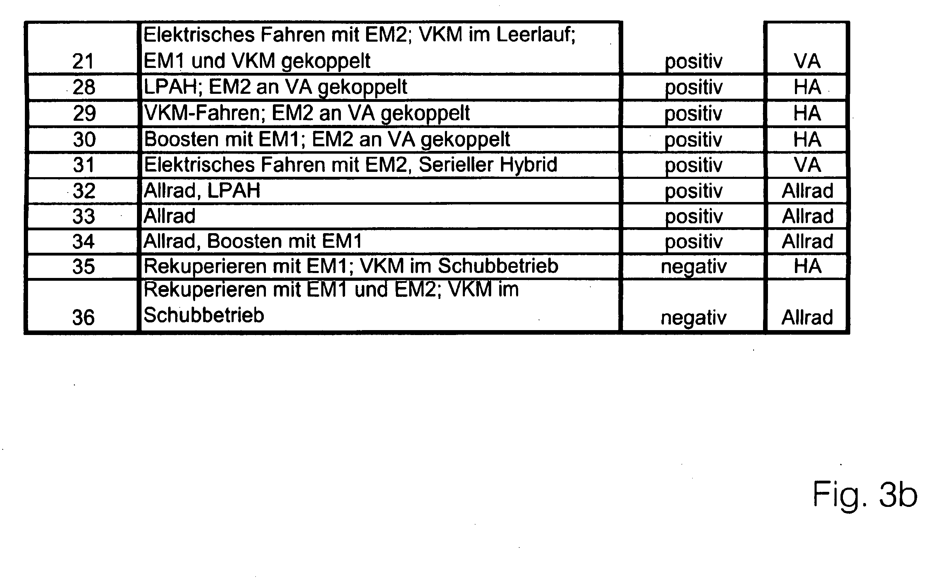

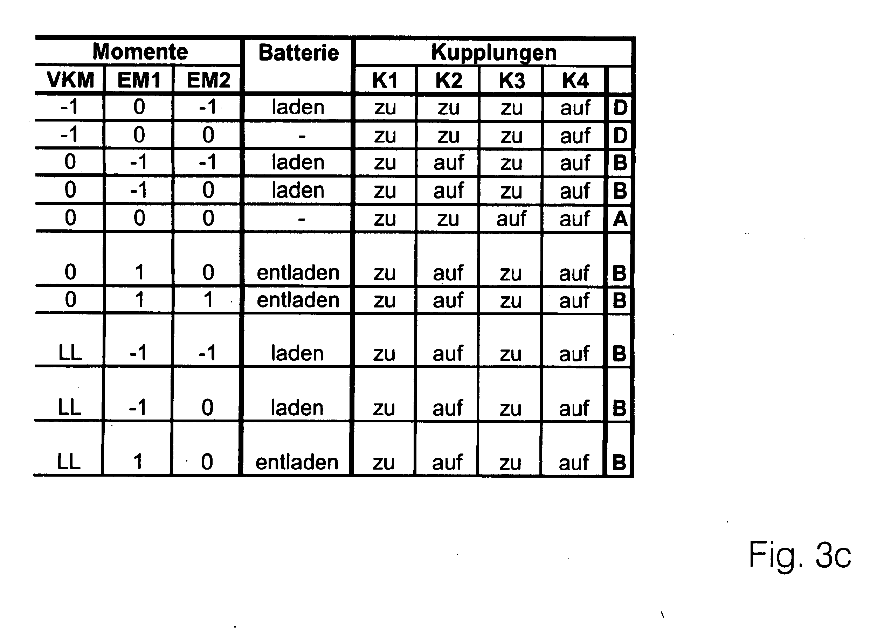

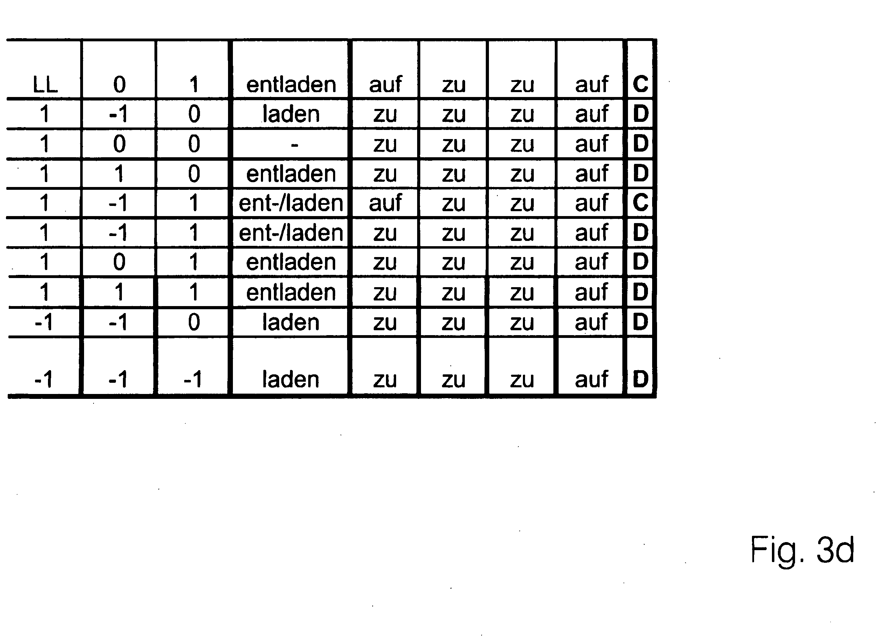

In **Fig. 3** sind die wichtigsten (aber nicht alle) mit diesen Komponenten darstellbaren Modi AMK in einer Tabelle zusammengestellt. Die Spalten geben nach der AMK - Nummer und der Beschreibung der Betriebsart das Achsmoment (negativ = Schubbetrieb, positiv = Zugbetrieb) an und welche Achse(n) angetrieben ist (sind). Weitere Spalten geben den Betriebszustand der Maschinen VKM, EM1, EM2 (1 = Zugbetrieb, -1 = Schleppbetrieb, 0 = ausgeschaltet, LL = Leerlauf), der Batterie ES und den Schaltzustand der Kupplungen K1 bis K4 an.

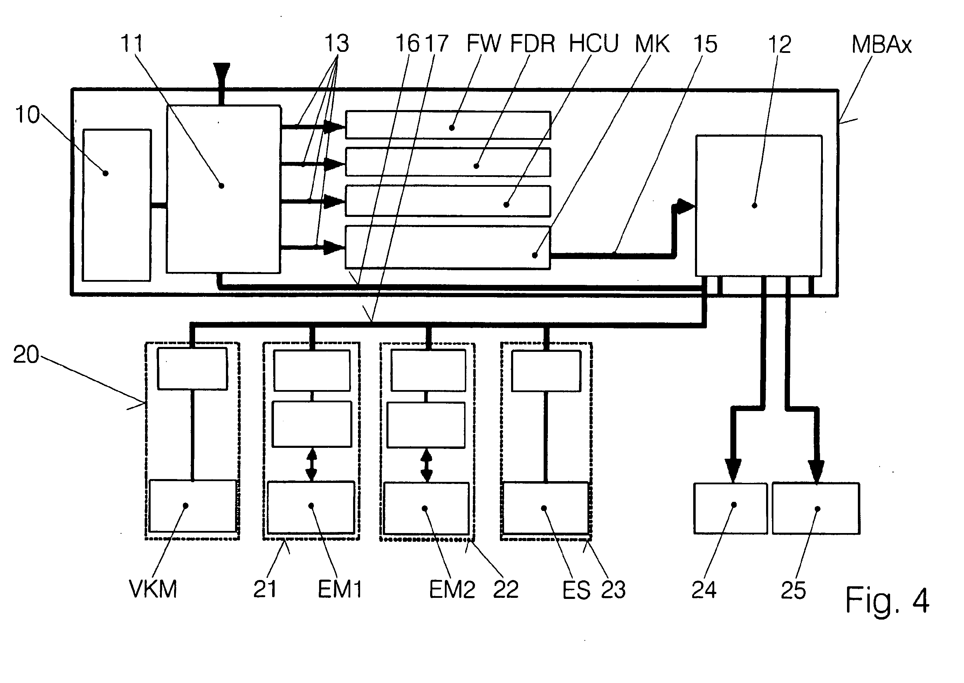

In **Fig. 4** ist die Steuereinheit MABx in ihrer Systemarchitekur dargestellt. Kennfelder, Getriebeübersetzungen und weitere unveränderliche Größen sind in einem nicht dargestellten Speicher hinterlegt. Ebenso die Parameter, die zur Anpassung an ein bestimmtes Fahrzeug wählbar sind. Die Steuereinheit MABx umfasst eine Schnittstelle 10 zum CAN-Bus des Fahrzeuges, eine Konditionierungseinheit 11 für die den Betriebszustand und/oder den Systemzustand beschreibenden Eingangsgrößen (Sensorsignale von den Komponenten) mit Treiberstufen, eine Konditionierungseinheit 12 für die Ausgangsgrößen mit Leistungsteil und Treiberstufen, Signalverbindungen 13 von der Konditionierungseinheit 11 zur Fahrerwunschauswertung FW, zum Fahrdynamikregler FDR, zum Hybridregler HCU, und zum Momentenkoordinator MK. Von letzterem werden die Aktuatoransteuersignale auf dem Weg 15 der Konditionierungseinheit 12 zugeführt. Auf dem Weg 16 werden ihr weitere Daten von der Konditionierungseinheit 11 zur Verfügung gestellt. Die Konditionierungseinheit 12 gibt Befehle an die Ansteuerung 24 des Getriebes SG und an die Ansteuerung 25 der Kupplungen K1 bis K4 aus und ist über einen weiteren Bus, den Hybrid-CAN-Bus 17, mit den Komponenten - Einheiten des Hybridantiebs verbunden. Diese Einheiten 20 bis 23 bestehen jeweils aus den Komponenten VKM (Baugruppe 20), EM1 (Baugruppe 21), EM2 (Baugruppe 22) und ES (Baugruppe 23) und deren Steuergeräten, Umrichtern und Diagnose- beziehungsweise Überwachungseinheiten.

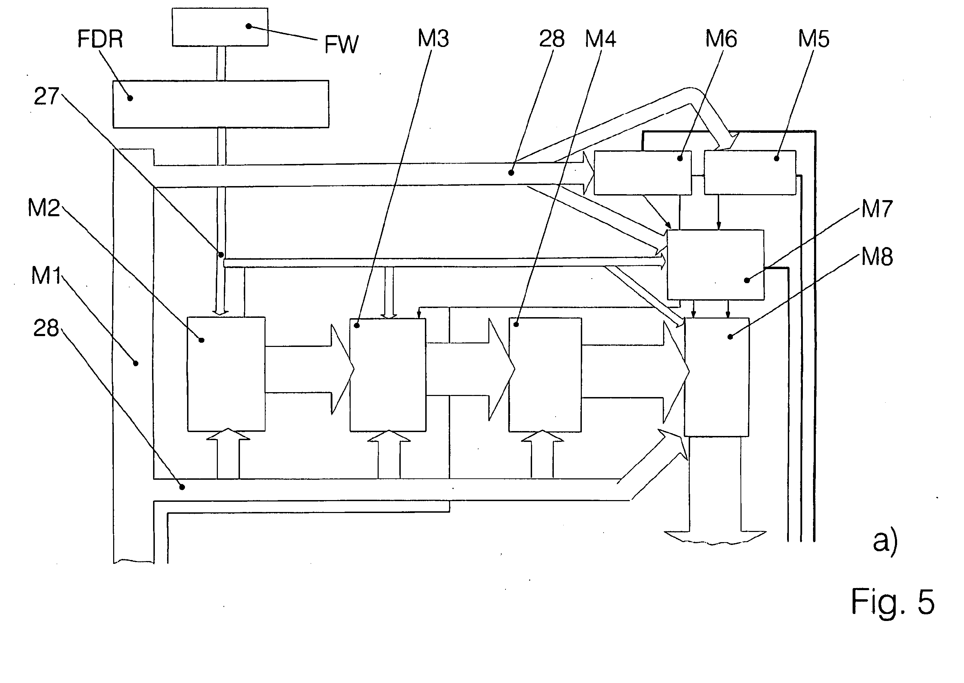

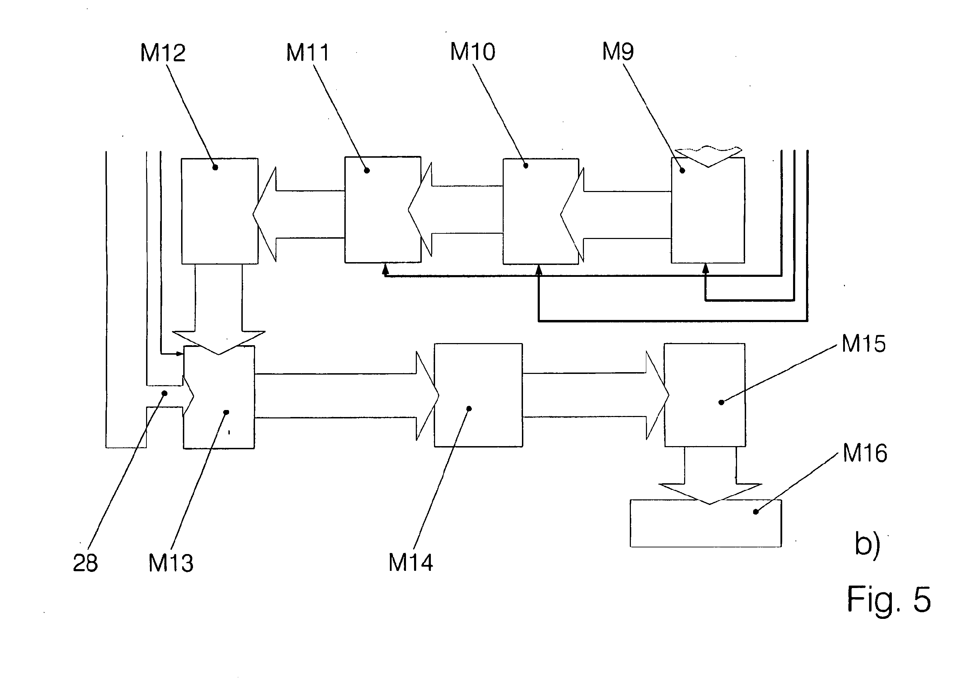

**Fig. 5** zeigt ein Ablaufschema der gesamten Steuerung eines Antriebes nach Fig. 2 im Hybridregler HCU, anhand dessen auch das erfindungsgemäße Steuerverfahren beschrieben wird. Es ist in Moduln (die mit einem Großbuchstaben M und durchlaufenden Nummern von 1 bis 16 bezeichnet sind) und Blocks innerhalb der Moduln aufgegliedert, wobei die im Folgenden aufgezählten und weiter unten ausführlich beschriebenen Moduln und Blocks als gedachte Einheiten mit einer bestimmten Funktion im repetitiv durchlaufenen Programm zu verstehen sind:

Der noch nicht zum Hybridregler HCU gehörende Block Fahrerwunsch FW ermittelt aus den Eingaben des Fahrers über Gas- und Bremspedal das auf die Straße zu bringende Drehmoment (im Folgenden nur mehr "Moment" genannt), das positiv, negativ (Bremsen) oder Null (Segeln) sein kann, und stellt es auf dem Weg 27 den Moduln M2, M3, M7 und M8 zur Verfügung.

Auch der Block Fahrdynamikregler FDR ist dem Hybridregler HCU noch vorgeordnet und beeinflusst wenn nötig die aus dem Fahrerwunsch FW ermittelten Momente, indem er bei Radschlupf einen Traktionseingriff vornimmt, und insbesondere bei einem Fahrzeug mit zwei angetriebenen Achsen auch in die Momentenverteilung zwischen den Achsen VA,HA eingreift.

Modul 1: Der Modul Systemzustandsanalyse (SZA) M1 nimmt zu aktuellen Betriebszuständen Betriebsdaten des Fahrzeuges und der Komponenten auf, stellt vorbereitende Berechnungen an (zum Beispiel der Maschinendrehzahlen) und hält diese über die Wege 28 für die Moduln M2 bis M8 bereit.

Modul 2: Der Achsmomentumsetzer (AMK) M2 stellt auf Basis des Fahrerwunsches FW und eventueller Vorgaben des Fahrdynamikreglers die in Frage kommenden Betriebmodi AMK (siehe Tabelle als Fig. 3) des Hybridantriebes zusammen.

Modul 3: Der Modul Komponentenverfügbarkeit (KV) M3 ist eine erste Filterstufe, in der diejenigen Modi AMK ausgeschieden werden, die Komponenten einbeziehen, die nicht oder nicht in ausreichendem Maße verfügbar sind, oder die gewissen strategischen Vorgaben nicht genügen.

Modul 4: Der Modul Gangvorwahl M4 identifiziert bei Vorhandensein eines Stufengetriebes auf Basis der Getriebeübersetzungen und der Drehzahlen alle Getriebegänge $G_i$, die für die von der Komponentenverfiigbarkeit nicht ausgeschiedenen AMK in Frage kommen. Er bildet so eine Anzahl von Modi AMGK, die größer als die Anzahl der Modi AMK ist.

Modul 5: Der Modul Wärmemanagement M5 berechnet mit Hilfe von Daten aus der Systemzustandanalyse (Modul 1) die maximalen und minimalen Leistungen der Maschinen VKM, EM1 und EM2.

Modul 6: Der Modul Ladungsmanagement (SOC) M6 berechnet mit Hilfe von Daten aus der Systemzustandanalyse (M1) und/oder Zustandsgrößen der Batterie (ES) deren Ladeleistungsgrenzen. Die Entladeleistung der Batterie wird von dem folgenden Modul (7) regiert.

Modul 7: Der Modul Dynamikmanagement (DM) M7 bestimmt aus den in den Moduln 5 und 6 ermittelten Leistungsgrenzen Drehmomentgrenzen. Er gibt damit den Bereich der Arbeitspunktoptimierung und Wirkungsgradberechnung im folgenden Modul (8) vor. Er greift in die Momentengrenzen ein, um den Fahrerwunsch hinsichtlich Dynamik bei möglichster Schonung der Batterie (ES) zu erfüllen.

Modul 8: der Modul Arbeitspunktoptimierung/Wirkungsgradberechnung M8 besteht aus den beiden ineinander greifenden Teilmoduln Arbeitspunktoptimierung und Wirkungsgradberechnung für die von der Gangvorwahl identifizierten Modi AMGK, unter Einbeziehung von Daten der Systemzustandsanalyse (Modul 1) und der im Modul 7 ermittelten Momentengrenzen.

Modul 9: Der Modul Bewerter Ladezustand M9 bewertet die von der Gangvorwahl identifizierten AMGK mit ihren in Modul 8 ermittelten Arbeitspunkten anhand der in Modul 6 ermittelten Ladungsgrenzen.

Modul 10: Der Modul Bewerter Wärme M10 bewertet die von der Gangvorwahl (Modul M4) identifizierten AMGK mit ihren in Modul M8 ermittelten Arbeitspunkten hinsichtlich thermischer Belastung.

Modul 11: Der Modul Bewerter Dynamik M11 bewertet die von dem Modul Gangvorwahl (M4) identifizierten AMGK mit ihren in Modul M8 ermittelten Arbeitspunkten anhand der in Modul 7 ermittelten Momentengrenzen.

Modul 12: Der Modul Gesamtbewertung M12 fasst die Wertnoten aus den Moduln 8,9,10 und 11 zu einer Gesamtwertnote zusammen.

Modul 13: Der Modul Komfortfilter M 13 bewertet die von der Gangvorwahl (Modul 4) identifizierten und in den folgenden Moduln gefilterten AMGK hinsichtlich Fahrkomfort und scheidet gegebenenfalls noch weitere AMGK aus.

Modul 14: Der Modul Sortierer M14 sortiert die AMGK nach ihrer in Modul M12 ermittelten Gesamtbewertung, die auch den Gesamtwirkungsgrad einschließt.

Modul 15: Der Modul Statusmaschine (AMK) erhält von Modul M14 die Liste der nach Bewertung und Wirkungsgrad sortierten AMGK und wählt die im Sortierer zu oberst erscheinende AMGK* als einzustellende AMGK aus. Weiters bereitet er die Schnittstellen zum folgenden Modul auf.

Modul 16: der Modul <u>Momentenkoordinator</u> (MK) vollzieht den Übergang von der aktuellen AMGK zu der einzustellenden AMGK*.

Es folgt die Beschreibung der einzelnen Moduln und ihrer Wirkungsweise:

### Modul 1: Systemzustandsanalyse (SZA) M1

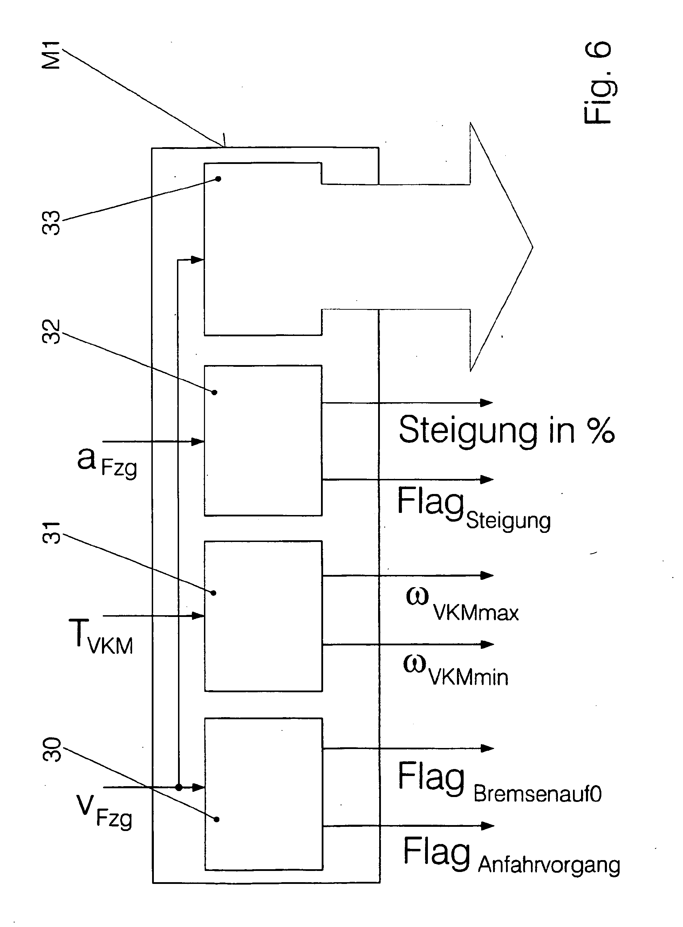

**Fig. 6** zeigt den schematischen Aufbau des Moduls Systemzustandsanalyse M1. Er setzt sich aus einzelnen Funktionsblöcken zusammen. Ein Block 30 generiert anhand der Geschwindigkeit des Fahrzeuges $v_{Fzg}$ einen Anfahrflag $Flag_{Anfahr}$ und einen Bremsflag $Flag_{Brems}$. Dieser soll bei sehr niedriger Geschwindigkeit anzeigen, ob das Fahrzeug anfahrt oder zum Stillstand abgebremst wird. Diese Flags werden in einem späteren Modul dazu verwendet, eine feste Betriebsstrategie auszuwählen, wenn aufgrund der geringen Drehzahlen der Maschinen kein korrekter Arbeitspunkt berechnet werden kann.

Der Block 31 "Vorgabe der minimalen und der maximalen Drehzahl der Verbennungskraftmaschine" soll die minimale Drehzahl ($\omega_{VKMmin}$) und die maximale Drehzahl ($\omega_{VKMmax}$) der Verbrennungskraftmaschine (im Folgenden kurz VKM) in Abhängigkeit von der Temperatur $T_{VKM}$ vorgeben. Diese Vorgabe soll im weiteren Verlauf des Verfahrens sehr niedere und sehr hohe Drehzahlen der VKM bei geringer Motortemperatur verhindern.

Der Block 32 "Steigungserkennung" ermittelt aus der Beschleunigung des Fahrzeuges $a_{Fzg}$ und aus der Erdbeschleunigung g die vom Fahrzeug momentan befahrene Steigung in Prozent und gibt einen Flag für die Steigungserkennung $Flag_{Steigung}$ aus.

Der Block 33 "Berechnung der Maschinendrehzahlen" berechnet die zu erwartenden Drehzahlen der E-Maschinen EM1, EM2 und der VKM, die in jeder AMGK bei der aktuellen Geschwindigkeit des Fahrzeuges in dem jeweiligen Getriebegang auftreten würden. Zur Gewinnung eines korrekten Geschwindigkeitssignals wird aus allen vier Raddrehzahlen ein weitgehend schlupfunabhängiges Geschwindigkeitssignal erzeugt.

Bei der Berechnung der Maschinendrehzahlen ($\omega_{VKM}$, $\omega_{EM1}$ und $\omega_{EM2}$) sind die Gesamtübersetzungen $\ddot{U}_{SGi}$ in den einzelnen Gängen $G_i$ und die Kupplungsstellungen zu berücksichtigen. In der Tabelle (Fig. 3) sind das:

Kupplungstellung A: K1 und K2 geschlossen, K3 und K4 offen,
Kupplungstellung B: K1 und K3 geschlossen, K2 und K4 offen,
Kupplungstellung C: K2 und K3 geschlossen, K1 und K4 offen,
Kupplungstellung D: K1, K2 und K3 geschlossen, K4 offen.

Die Drehzahl der E-Maschine 1 EM1 $\omega_{EM1}$ errechnet sich je nach Kupplungsstellung aus der Fahrzeuggeschwindigkeit $v_{Fzg}$ und den jeweils zwischen dem Rad und der EM1 liegenden Übersetzungen Ü. Zum Beispiel bei Kupplungsstellung B oder D:

$$\omega_{EM1} = \ddot{U}_{SG} \times \ddot{U}_{HAD} \times (v_{Fzg}/r_{Rad})$$

Da diese Berechnung der Maschinendrehzahlen vor der Bestimmung des Arbeitspunktes stattfindet, kann für alle AMGK ohne Verbindung zu einer der Achsen und mit positiver Leistung der VKM, für die EM1 und die VKM keine Drehzahl ermittelt werden.

### Modul 2: Achsmoment-Umsetzer (AMK) M2

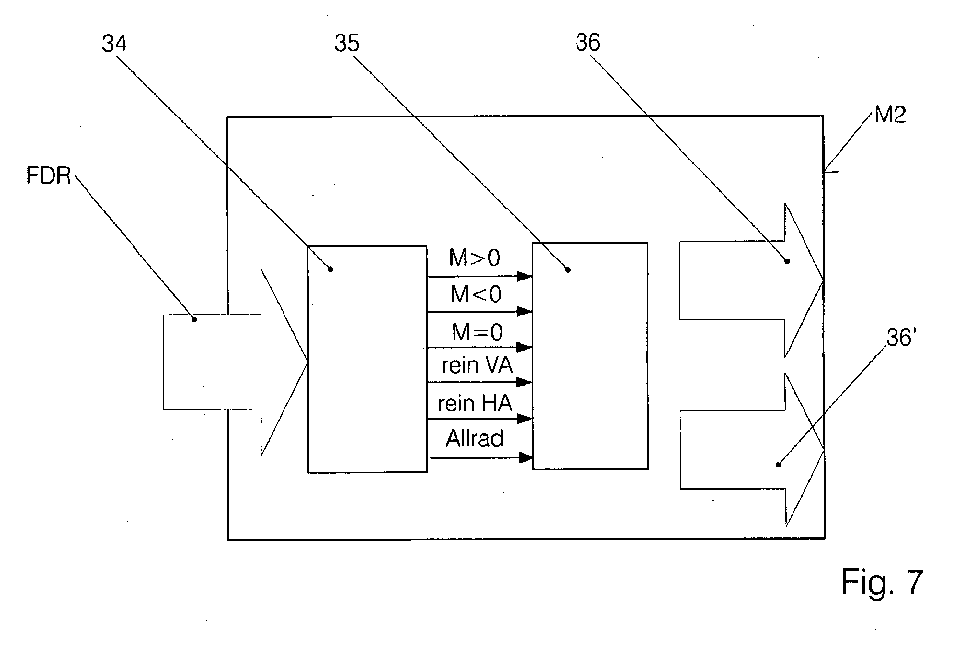

Der Modul Achsmoment-Umsetzer in Fig. 7 steht eingangsseitig mit dem Fahrdynamikregler FDR in Verbindung, der die Achsmomente $M_{VA}$ und $M_{HA}$ liefert und gegebenenfalls einen Traktionseingriff vornimmt. Er umfasst zwei Blöcke: "Momentenauswertelogik" 34 und "KO-Filter" 35. "KO" steht für "Knock-out", das heisst, alle der Momentenanforderung nicht entsprechenden AMK (siehe die Spalte "Achsmoment" in Fig. 3) werden ausgeschieden.

Der <u>Block 34 "Momentenauswertelogik"</u> kategorisiert vorerst die Achsmomentenvorgaben ($M_{VA}$, $M_{HA}$) des Fahrdynamikreglers nach dem Vorzeichen (+ , - oder 0) des Summenachsmomentes ($M_{VA} + M_{HA}$) und, falls ein Traktionseingriff TE des Fahrdynamikreglers FDR vorliegt (Signal TE=1), zusätzlich nach den angetriebenen Achsen. Das Vorzeichen des Summenachsmomentes und somit die Grundkategorie (positiv=1, negativ=2, null=3) steht als Signal den nachfolgenden Moduln zur Verfügung. Bei der Teilfunktionalität "Angetriebene Achse" (rein VA, rein HA, Allrad) muss nach dem Vorhandensein eines Traktionseingriffes des Fahrdynamikreglers unterschieden werden:

Bei Traktionseingriff des Fahrdynamikreglers (Flag TE = 1) erfolgt die weitere Unterkategorisierung nach der angetriebenen Achse (nur Vorderachse, nur Hinterachse oder Allrad, siehe Fig. 3). Die Unterkategorie wird ebenfalls als Signal den nachfolgenden Moduln zur Verfügung gestellt.

Liegt kein Traktionseingriff des Fahrdynamikreglers vor (Flag TE = 0), wird nur das Summenachsmoment ($M_{VA}$ + $M_{HA}$) betrachtet. In diesem Fall ist keine weitere Unterkategorisierung nötig, da der später durchlaufene Modul M8 das von dem Fahrdynamikregler geforderte Summenachsmoment ($M_{VA}$ + $M_{HA}$) energetisch optimal auf die beiden Achsen verteilen.

Der <u>Block 35 "Knock-Out-Switch AMK"</u> hat die Aufgabe, mit den Informationen des Blocks 34 (Summenachsmoment und angetriebene Achse(n)) eine Vorauswahl der für die geforderten Achsmomente in Frage kommenden Modi AMK zu treffen. Bei der Funktionalität Knock-Out-Switch AMK wird nach dem Vorhandensein eines Traktionseingriffes des Fahrdynamikreglers unterschieden.

Wenn kein Traktionseingriff vorliegt (Flag TE = 0), werden die sinnvollen Modi AMK auf Basis des Summenachsmomentes ($M_{VA}$ + $M_{HA}$) und der Grundkategorie (1, 2 oder 3) des Summenmomentindikators ausgewählt. Wenn ein Traktionseingriff vorliegt (Flag TE = 1), muss bei der Auswahl zusätzlich auch die Unterkategorie der angetriebenen Achse berücksichtigt werden.

An dieser Stelle ist zu erläutern, dass in der gesamten Beschreibung die momentanen Größen (Betriebszustand) explizit als aktuell bezeichnet sind. Alle nicht als aktuell bezeichneten Größen sind die nach Durchlaufen des beschriebenen Verfahrens schließlich an den Komponenten eingestellten Größen. Die den einzelnen Modi zugeordneten Größen und Flags durchlaufen die einzelnen Moduln jeweils als Paket. Das kann in verschiedener Weise ausgeführt beziehungsweise programmiert sein. Ein geeignetes und im vorliegenden Ausführungsbeispiel benutztes Werkzeug ist "SIMULINK"®, das die Anordnung der Daten in einer Matrix vorsieht; in der vorliegenden Anwendung ist es eine AMGK-Matrix, die Simulink mit Vektoren 36, im vorliegenden Beispiel mit einem AMK-Vektor, einem Gang-Vektor, einem Knock-Out- Vektor, etc, verknüpfen kann.

Der Knockout Vektor der Ist-AMK bzw Ist-AMGK, das ist die aktuelle AMK bzw AMGK vom vorigen Abtastschritt, wird vom Modul 15 Statemachine (M15) zur Verfügung gestellt.

### Modul 3: Komponentenverfügbarkeit (KV) M3

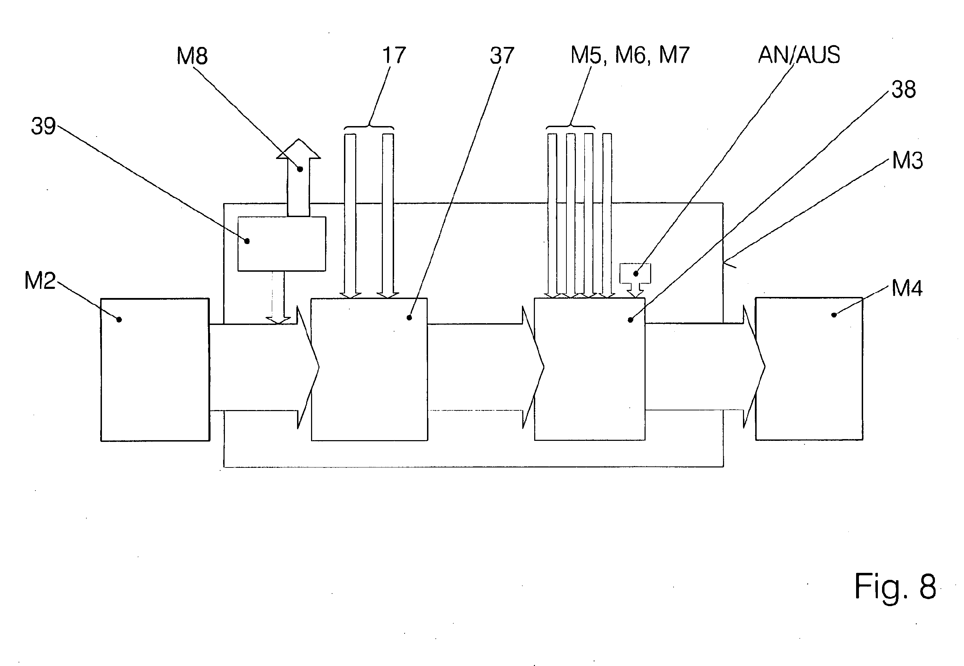

Der Modul "Komponentenverfügbarkeit" (KV), illustriert durch **Fig. 8**, soll aus den vom Modul 2 "Achsmoment-Umsetzer" ausgewählten Modi (AMK) die jenigen Modi ausscheiden, die aus Sicht der Verfügbarkeit der Komponenten nicht realisierbar sind. Der aktuelle Zustand der jeweiligen Komponente wird über den Modul "Momentenkoordinator" (Modul 16), oder über den Hybrid-CAN - Bus 16 gemeldet. Der Komponentenverfügbarkeits-Modul M3 besteht aus aus zwei Blocks, einem Block 37 "Filterung nach Verfügbarkeit der Komponenten" und einem Block 38 "Filterung nach Strategie" und enthält hier einen weiteren Block 39 "Momentbeschränkung", der auch in einem anderen Modul untergebracht sein könnte.

Der Block 39 "Momentenbeschränkung" soll das maximal umsetzbare Moment für jede Gangstufe am Eingang des Getriebes oder der Hinterachse (Hinterachsdifferential) bestimmen und dem Modul 8 zur Verfügung stellen. Mit diesem Grenzmoment ist gewährleistet, dass die Maschinen (VKM, EM1, EM2) im Antriebsstrang der Hinterachse HA nicht durch Überlastung zerstört werden. Auf der im beschriebenen Ausführungsbeispiel ebenfalls angetriebenen Vorderachse VA ist hier aufgrund der mechanischen Auslegung keine Momenteneinschränkung erforderlich.

Die von der mechanischen Auslegung bestimmten maximalen Momente für das Hinterachsdifferential HAD und das Schaltgetriebe SG sind in dem nicht dargestellten Speicher als feste Größen hinterlegt. Das maximale Hinterachsdifferential -Moment wird über die Gang-Übersetzungen auf die Getriebeeingangsseite des Schaltgetriebes rückgerechnet. Dann wird dieses errechnete Moment mit dem maximalen Eingangsmoment des Schaltgetriebes (SG) verglichen. Diese Grenzmomente für jede Übersetzungsstufe werden in die AMGK-Matrix eingetragen.

Dem Block 37 wird die Verfügbarkeitsinformation jeder Komponente über den Hybrid-CAN-Bus 17 von der separaten Zustandsanalye der einzelnen Baugruppen 20-23 (siehe Fig. 4) und der Kupplungen K1 bis K4 (siehe Fig. 2) gemeldet. Aus der Auswertung der Verfügbarkeitssignale der Komponenten (VKM, EM1, EM2, SG, K1, K2, K3, K4, ES) und einem weiteren temporären Verfügbarkeitssignal der Antriebskomponenten VKM, EM1, EM2 aus dem Modul Momentenkoordinator M16 wird ein KO-Vektor gebildet. Die Komponentenverfügbarkeit nimmt anhand des KO-Vektors eine Filterung vor.

Der Block 38 "Filterung nach Strategie" tritt immer dann in Wirkung, wenn hochrangige eindeutige Entscheidungen unabhängig von der Bewertung der Modi zu treffen sind. Dazu zählt zum Beispiel das gezielte Verhindern des Abstellens der Verbrennungskraftmaschine aufgrund von Entscheidungen der Moduln M5, M6, M7 (Management Wärme, SOC, Dynamik).

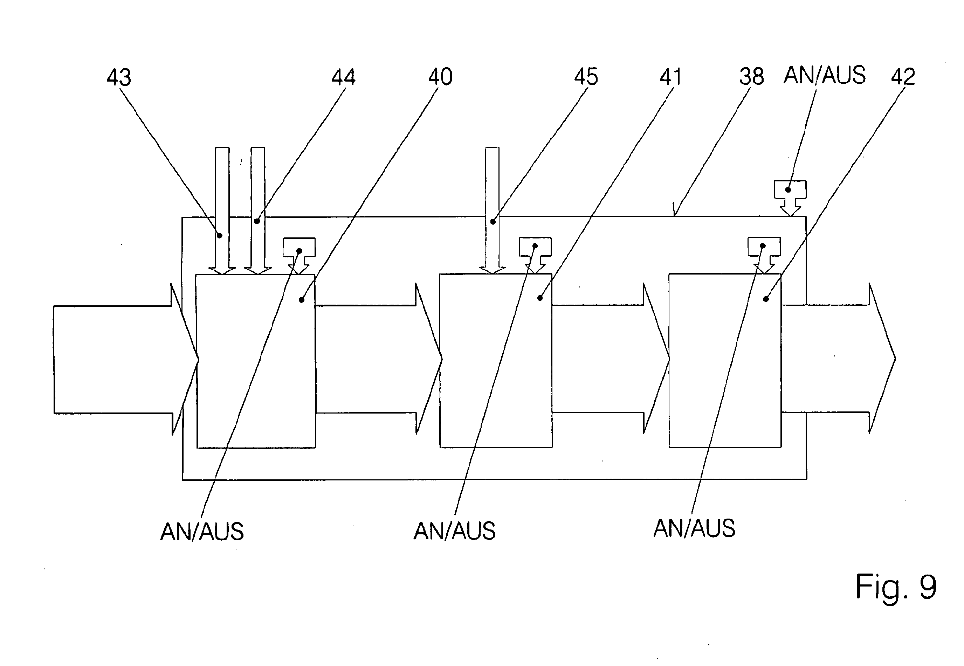

**Fig. 9** zeigt den Block 38 "Filterung nach Strategie" im Detail. Er enthält die Unterblocks 40 "Filterung nach internem VKM-Start-Stop", 41 ("Filterung nach Kickdown - Flag" und 42 "Filterung nach Wunsch-AMGK", die auf einen "Verbrennungskraftmaschine -Start-Stopp-Flag" (40), auf einen "Kick-Down-Flag" (41) und auf eine Wunsch-AMGK (42) ansprechen. Dazu im Einzelnen:

a) Filterung nach internem Verbrennungskraftmaschine Start-Stopp-Flag.

Der Unterblock 40 empfängt vom Modul Dynamik-Management (Modul 7) den Start-Stopp-Flag 43 ($Flag_{StartStopp}$) und eine Meldung "Status VKM" 44. Durch Berücksichtigung dieses Flags und des aktuellen Zustands der VKM (ist gestartet/abgestellt) findet eine Filterung von betroffenen AMK statt. Das VKM-Stopp-Signal wird im Modul Komponenten-Verfügbarkeit (M3) als Ausschlusskriterium verwendet. Kriterium ist: Wenn ein Modus der AMK die VKM-Start-Stopp-Bedingung verletzt, wird dieser Modus aus der AMK herausgefiltert. Zur Entscheidung, ob die VKM im Leerlauf abgestellt werden soll oder nicht, filtert der Modul M3 bei Anliegen des $Flag_{StartStopp}$ = 0" nur jene AMK heraus, die die VKM im Leerlauf abstellen würden.

b) Filterung nach Kick-Down-Flag

Ein Kick-Down kann vom Fahrer im Antriebsfall immer gegeben werden, wenn eine erhöhte Leistungfähigkeit der Komponenten auch hinsichtlich Dynamik gefort ist. Der Unterblock 41 empfängt dann vom Modul Dynamik-Management (Modul 7) einen Kick-Down-Flag 45. In diesem Fall erfolgt ein Herausfiltern aller Modi, in denen die VKM nicht auf die Hinterachse des Antriebstrangs wirkt. Dazu muss vom Modul Achsmoment-Umsetzer (Modul 2) eine positive Momentenkategorie vorgegeben sein (M>0).

c) Filterung nach Wunsch-AMK

Der Unterblock 42 bietet dem Fahrer die Möglichkeit, gezielt bestimmte Modi unter Berücksichtigung verschiedener Einschränkungen anzuwählen. Dazu wird der entsprechende KO-Vektor ausgewählt und zur Wirkung gebracht. Soll keine Filterung erfolgen, so kann der Block 42 durch einen entsprechenden Parameter desaktiviert werden.

### Modul 4: Gang-Vorwahl M4

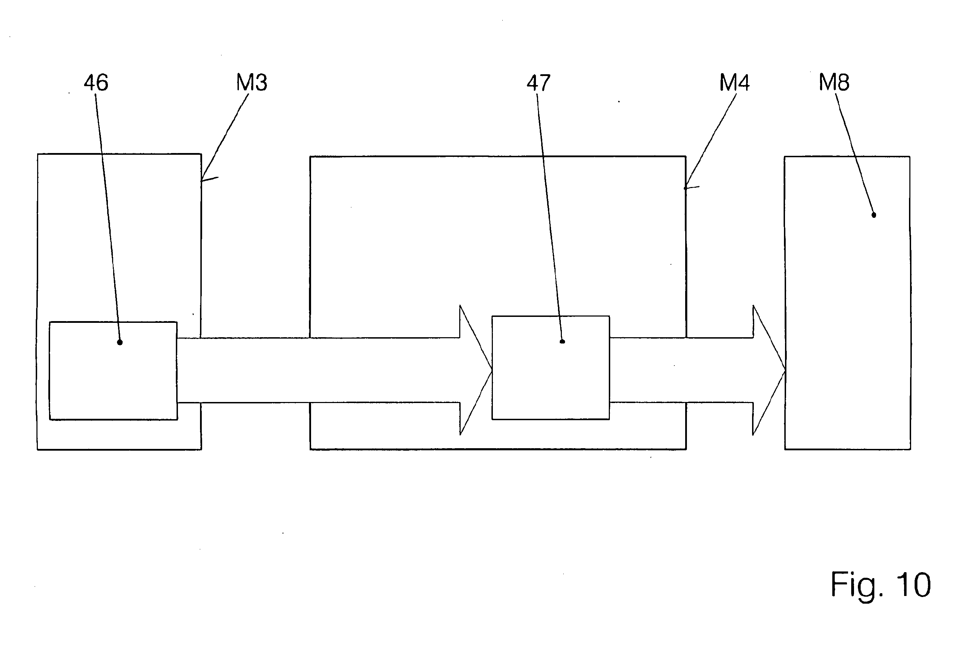

Aufgabe der Gangvorwahl ist es, für die vom Modul Komponentenverfügbarkeit (M3) als möglich eingestuften AMK zusätzlich alle möglichen Gänge zu identifizieren. Im weiteren Verlauf der Filterkette werden nur noch jene AMGK einer AMK weiterbearbeitet, die mögliche Gangstufen darstellen. Der Modul M4, dargestellt in **Fig. 10,** steht eingangsseitig mit dem Modul Komponentenverfügbarkeit M3 in Verbindung und enthält einen Block 47, der eine Drehzahlbedingung auf die vom Modul M3 vorgefilterten AMK anwendet und die dieser Bedingung genügenden Modi AMGK an den Modul M8 weitergibt. Dazu werden zunächst sieben AMK-Gruppen definiert, die dann in der Gangvorwahl unterschiedlich behandelt werden. Die Modi (siehe Fig. 3, dort "AMK") einer AMK-Gruppe werden bezüglich der Gangvorwahl gleich behandelt. Zur Veranschaulichung sind weiter oben die Kupplungsstellungen A,B,C und D definiert.
Zum Beispiel gelten in den folgenden AMK-Gruppen die Drehzahlbedingungen:

Gruppe 1-VKM-Betrieb (*AMK*: *1, 2, 28-30, 34-36*)

Die Gänge müssen zwingend auf den Drehzahlbereich der VKM ausgelegt sein. Drehzahlbedingung: $n_{VKMMin} < n < n_{VKMMax}$

Gruppe 2 - VKM-Anpassung (*AMK*: *14, 17, 20, 21, 31*)

Kupplungsstellung B: Ein Zukoppeln der VKM ist wahrscheinlich.
Kupplungsstellung C: Der Gang kann vorausschauend für einen Betrieb der VKM gewählt werden. Da K1 geöffnet ist, ist der Getriebeeingang lastfrei und damit ein Schaltvorgang nicht spürbar.
Drehzahlbedingung: $n_{VKMMin} < n < n_{VKMMax}$

Gruppe 3 - TowStart-Anpassung (*AMK: 3*, 6, *10*)

Die Verbrennungskraftmaschine ist nicht in Betrieb. Kupplungsstellung B. Die EM1 wird motorisch oder generatorisch betrieben. Die Gangwahl wählt vorausschauend einen Gang, der ein Anschleppen des Fahrzeuges (TowStart) ermöglicht, in dem die Drehzahl der VKM nahe der Leerlaufdrehzahl ist. In den weiteren Gruppen ist keine Berechnung notwendig. Der je nach Gruppe richtige Gang wird über den KnockOut-Vektor vorgegeben.
Die VKM beziehungsweise die EM1 können nur in einem begrenzten Drehzahlbereich betrieben werden. Nur die AMGK, die garantieren, dass die Getriebeeingangsdrehzahl sich in diesem Drehzahlbereich befindet, dürfen als Modi an die folgenden Moduln weitergegeben werden. Alle anderen werden über den KnockOut-Vektor gestrichen.

### Modul 5: Wärmemanagement M5

Der Modul Wärmemanagement M5 hat die Aufgabe, bei der Wahl des Arbeitspunktes thermisch unerwünschte Bereiche der Hybridkomponenten auszuschließen und die elektrischen Leistungsgrenzen der E-Maschinen EM1, EM2 sowie die thermisch eingegrenzte Maximalleistung der VKM an folgende Moduln (insbesondere an Modul M10) weiterzugeben. Als Querschnittsfunktion wird im Wärmemanagement das "Start-Stopp-Flag" gebildet.

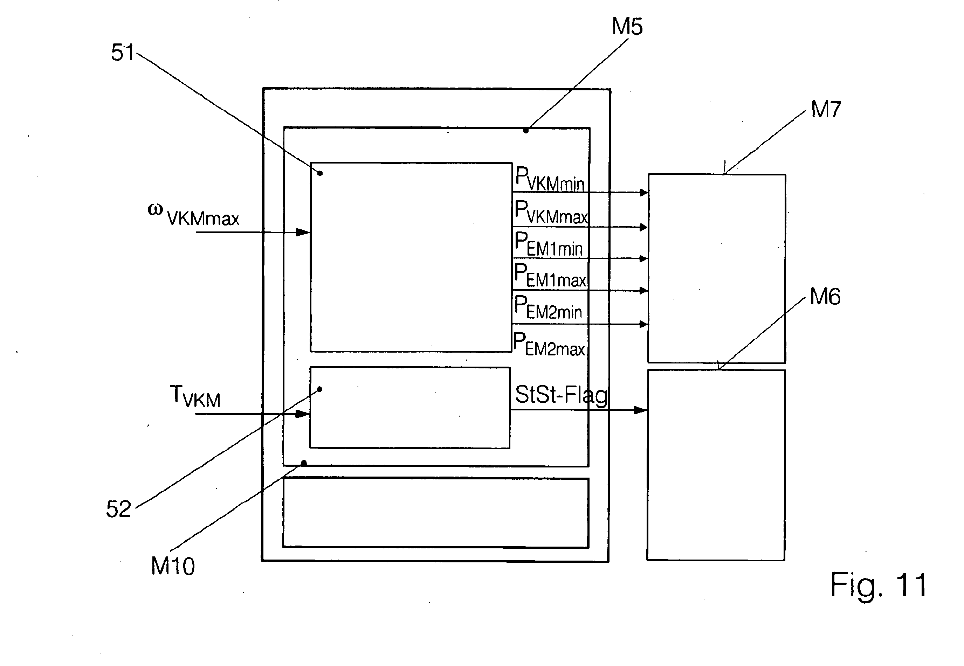

In **Fig. 11** umfasst der Modul M5 einen Block 51 "Berechnung der Maschinenleistungsgrenzen" und einen Block 52 "Erzeugung des Start-Stop-Flags". Der Block 51 berechnet die Leistungsgrenzen der VKM und der Elektrischen Maschinen EM1, EM2.

### Berechnung der Leistungsgrenzen der Verbrennungskraftmaschine

Zur Berechnung der oberen Maschineneleistungsgrenze der VKM wird eine Drehzahlbedingung und eine parametrierbare maximale Leistung benötigt und ist eine Fallunterscheidung zwischen seriellen und parallelen Modi zu treffen. Parametrierbar bedeutet für die jeweilige Anwendung (Zur Anpassung an das jeweilige Fahrzeug) wählbar.

a) Modi mit positivem Sollmoment der VKM (Seriell = Inselbetrieb = VKM treibt nur den Generator)

Da bei seriellem Betrieb (zum Beispiel AMK 31, siehe Tabelle in Fig. 3) die Drehzahlbedingung des Moduls Gangvorwahl M4 für zu hohe Drehzahlen nicht greift, hat das Wärmemanagement die Aufgabe, für diese Modi die Einhaltung der von dem Modul Systemzustandsanalyse M1 berechneten Drehzahlobergrenze zu garantieren. Die maximale Leistung der VKM errechnet sich aus der Drehzahl und dem Moment der streng monoton steigenden Optimallinie (aus Überlagerung der Kennfelder von VKM und EM1) bei der Drehzahlobergrenze der Verbrennungskraftmaschine. Die sich ergebende maximale Leistung wird mit einer Minimum-Auswahl mit der temperaturabhängigen Leistung $P_{VKMmax}$ aus dem Modul Systemzustandanalyse M1 verknüpft.

b) Parallele Modi unabhängig vom Soll-Moment (Die Verbennungskraftmaschine ist mit der Hinterachse verbunden)

In diesem Fall ist die die maximale Leistung die parametrierbar und von der Temperatur der Verbrennungskraftmaschine abhängige Leistung $P_{VKMMax}$. Die

Leistung der VKM ergibt sich aus der Schleppkennlinie und der temperaturabhängigen maximal zulässigen Drehzahl der Verbrennungskraftmaschine $\omega_{VKMmax}$. zu: $M_{VKMSchlepp\,max} = f(\omega_{VKMmax})$

Mit der Vorgabe einer minimalen Leistung der VKM $P_{VKMMmin}$ als untere Leistungsgrenze kann der Modul Wärmemanagement M5 auch den Schleppbetrieb einschränken und damit verhindern, daß die VKM im Schubbetrieb durch einen zu niedrigen Gang eine zu hohe Drehzahl erreicht. Die minimale Leistung der VKM errechnet sich für alle Modi aus dem maximalen negativen Moment im Schleppbetrieb ($M_{VKMSchleppmax}$) und der temperaturabhängigen maximalen Drehzahl der VKM . Die maximale negative Leistung der Verbrennungskraftmaschine ist damit: $P_{VKMmin} = \omega_{VKMmax}\,M_{VKMSchleppmax}$

### Berechnung der Leistungsgenzen der Elektrischen Maschinen (EM1, EM2)

Ebenso wie die Leistungsgrenzen der VKM ist auch die maximale und die minimale Leistung der elektrischen Maschinen EM1,EM2 vom Modus abhän-gig. Im generatorischen Betrieb ist die untere Grenze der Leistung (Sekunden- oder Dauerleistung) die maximale Leistung im Zugbetrieb der EM1, aber umgerechnet auf den generatorischen Bereich und die obere Grenze ist Null. Im motorischen Betrieb ist die untere Grenze 0 kW und die obere Grenze die maximale Leistung der EM1.

Die im Block 51 errechneten Maschineneleistungsgrenzen werden in einem folgenden Modul (M8: Arbeitspunkt/ Wirkungsgrad) den Bereich der Arbeitspunktoptimierung durch das Setzen von Leistungsgrenzen einschränken.

Durch Setzen des "Start-Stopp-Flags" (Block 52) wird der für eine Filterung der AMK-Liste durch den Modul Komponentenverfügbarkeit (Modul 3) benötigte Flag "Start-Stopp-Flag" generiert. Dieser Flag hat folgende Bedeutung: Start-Stopp-Flag = 1: VKM darf nach Belieben gestartet und abgestellt werden, Start-Stopp-Flag = 0: die VKM darf, einmal gestartet, nicht mehr abgestellt werden. Der Start-Stopp Flag wird vom Block 52 gesetzt, wenn die Temperatur der VKM unter einem parametrierbaren Wert liegt. Er wird später vom Wärmemanagement dazu genutzt, bei einer zu tiefen Temperatur $T_{VKM}$ der VKM ein Abstellen der VKM zu verhindern.

## Modul 6: Ladungsmanagement (SOC) M6

Der Modul Ladungsmanagement ("State of Charge" = SOC) sorgt für einen ausgeglichenen Ladezustand der Batterie (ES), indem er einerseits für gewisse AMK bzw AMGK Leistungsgrenzen der Batterie an das Dynamikmanagement (M7) vorgibt, andererseits der Bewertung (dem SOC-Bewerter, M9) die zu bewertenden Daten für die unterschiedlichen AMK bzw AMGK nach deren Einfluss auf einen ausgeglichenen Ladezustand vorgibt. Weiters analysiert er den Batteriezustand.

Der Modul Ladungsmanagement versucht, die Batterie bei niederem Ladestand zu laden und reduziert bei hohem Ladestand kontinuierlich die mögliche Ladeleistung. Das SOC-Management regelt nur die Ladeleistung der Batterie, aber nicht deren Entladeleistung. Die Regelung der Entladeleistung der Batterie übernimmt das Dynamikmanagement (Modul 7). Die Ladegrenzen der Batterie sind unabhängig von der Fahrdynamik, im Gegensatz dazu sind die Entladegrenzen der Batterie sehr wohl von ihr abhängig (z.B. bei einem Modus "BOOST", in dem eine E-Maschine die VKM unterstützt, um - zum Beispiel für einen Überholvorgang - die maximal mögliche Leistung zu erreichen).

Ein gespeichertes Kennfeld für Ladezustand und Ladeleistung der Batterie ist in Bereiche mit jeweils geeigneter Ladeleistung eingeteilt. So gibt es einen optimalen Bereich für maximale Lebensdauer der Batterie ES und einen verbotenen Bereich, in dem sie Schaden leidet, und Zwischenzonen.Wenn der Ladestand unter einem parametrisierbaren Wert fällt, wird ein Start/Stopp Flag gesetzt (Querschnittsfunktion). Ist er gesetzt, wird ein Abstellen der VKM verhindert.

## Modul 7: Dynamik - Management M7

Unter Berücksichtigung der Vorgaben der vorher beschriebenen Managementsysteme (SOC, Wärme, Moduln M5,M6) gibt der Modul Dynamikmanagement M7 den Bereich der Arbeitspunktoptimierung und der Wirkungsgradberechnung vor. Er greift dabei aktiv in die Momentengrenzen ein, um den Fahrerwunsch hinsichtlich Dynamik zu erfüllen und die Batterie zu schonen. Der Modul Dynamikmanagement M7 hat folgende Aufgaben bzw Besonderheiten :

- Er hat die höchste Priorität der Managementsysteme,
- Er enthält eine Zustandsanalyse für den Leistungshaushalt und Vorgabe von Maschinenmomentengrenzen,
- Er berücksichtigt bei der Vorgabe der Momente der elektrischen Maschinen EM1,EM2 die Batterie ES und erhöht so deren Lebensdauer,
- Er kann Momentengrenzen dynamisch verschieben, (z.B Boost: mehr Moment auf E-Maschinen, da elektrisch das Soll-Moment schneller erreicht wird, dann Verschiebung der Antriebsleistung auf die VKM),
- Er gibt die Beurteilungskriterien für die unterschiedlichen Modi AMK bzw AMGK nach deren Einfluss auf Dynamikanforderung und Batterielebensdauer an den Dynamikbewerter M11 vor,
- Er berücksichtigt die Verteilung der verfügbaren elektrischen Leistung auf die beiden elektrischen Maschinen EM1, EM2.

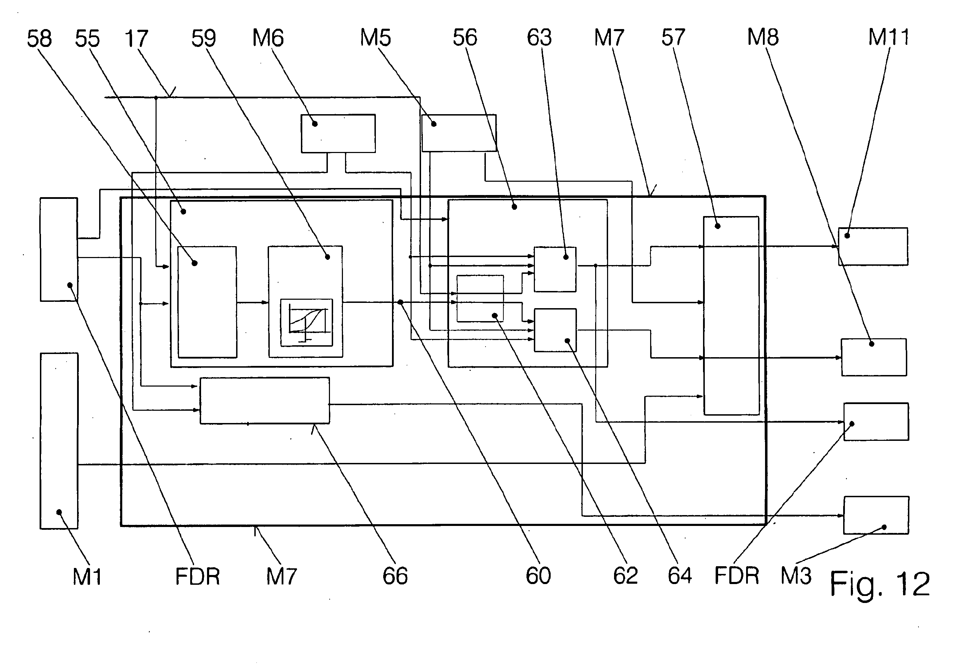

In **Fig.12** ist die Softwarestruktur des Moduls Dynamikmanagement (M7) dargestellt. Er enthält im Wesentlichen drei Blocks: Einen Dynamikblock 55, einen Sammelblock 56 und einen Umrechnungsblock 57. Der Dynamikblock 55 steht eingangsseitig mit dem Fahrdynamikregler FDR und über den Momentenkoordinator M6, den Konditionierer 12 und den Hybrid-CAN-Bus 17 mit den Komponenten - Einheiten 21 bis 23 (Fig.4) und 25,26 in Verbindung, und mit der Batterie ES. Im Dynamikblock 55 errechnet zuerst ein Unterblock 58 einen Elektro - Dynamikfaktor $E_{Dyn}$ und legt in der Folge ein Unterblock 59 die dynamisch korrigierten Leistungsgrenzen der Batterie ES fest und stellt sie dem Sammelblock 56 zur Verfügung (Linie 60 ).

Der Elektro - Dynamikfaktor $E_{Dyn}$ erweitert den Dynamikfaktor um die Betrachtung der Batterie. Er ist immer kleiner gleich dem Dynamikfaktor aus der Fahrerwunschauswertung FW. Nur wenn die Batterie im Idealzustand für hohe Entladung ist, sind beide Dynamikfaktoren gleich ($E_{Dyn}$=DynF).

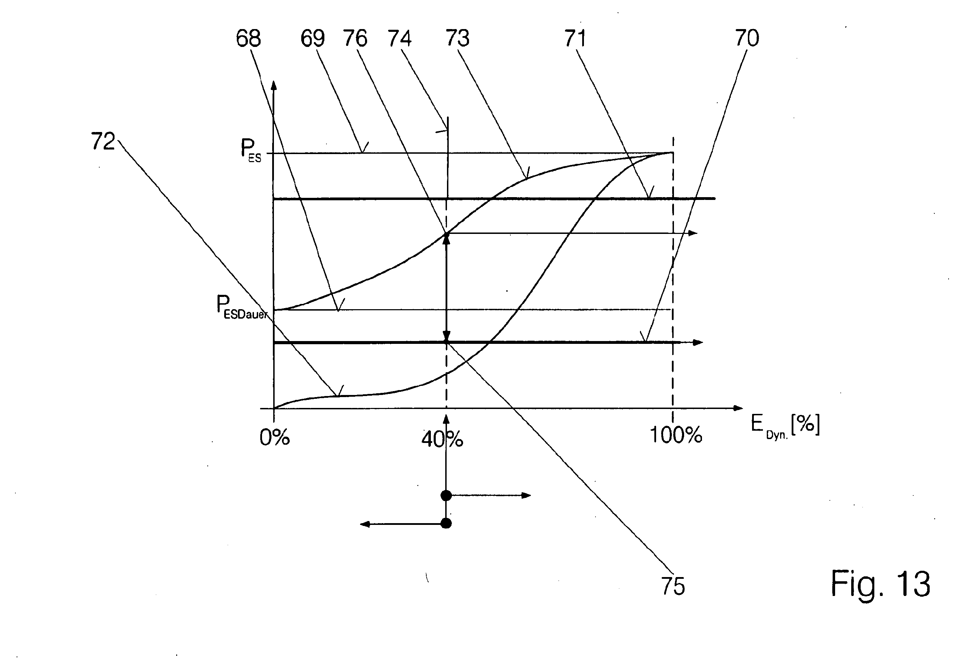

**Fig. 13** zeigt die Grenzen der von der Batterie ES abgegebenen und von den elektrischen Maschinen aufgenommenen Leistung (auf der Ordinate) in Abhängigkeit vom Dynamikfaktor (auf der Abszisse), mit anderen Worten von der Dynamikanforderung. Der Dynamikfaktor Edyn liegt zwischen 0 % (keine Dynamikanforderung, Schonung der Batterie) und 100 % (höchste Dynamikanforderung, auch bei Überlastung der Batterie). Bei den Leistungsgrenzen der Batterie wird zwischen einer Dauerleistung $P_{ESdauer}$ (68) und einer Sekundenleistung $P_{ESsek}$ (69) (auf der Ordinate aufgetragen) unterschieden. Ebenfalls auf der Ordinate sind die Leistungsgrenzen der elektrischen Maschine EM1 aufgetragen: $P_{EM1min}$ 70 und $P_{EM1max}$ 71. Die Kennlinien 72,73 berücksichtigen die Lastkollektive des Fahrers und die Lebensdauer der Batterie, wobei erstere (72) für ein Minimum an Dynamik sorgt und zweitere (73) die maximale Batterieleistung zwecks Optimierung ihrer Lebensdauer beschränkt.

Bei einer mittleren Dyanamikanforderung von 40 % schneidet die entsprechende vertikale Gerade die der minimalen Leistung der EM1 entsprechende Horizontale 70 im Punkt 75 und die Dynamik-Kennlinie 73 im Punkt 76. Dem entsprechen die minimale und maximale dynamische Leistung der EM1, $P_{EM1minD}$ und $P_{EM1maxD}$. Das sind deren Leistungsgrenzen für die Optimierung deren Arbeitspunktes im folgenden Modul M8.

Im Sammelblock 56 (wieder in Fig. 12) werden dann die verschiedenen Leistungsgrenzen zusammengeführt, und zwar: die dynamisch korrigierten Leistungsgrenzen der Batterie (ES) aus Block 55, die thermischen Leistungsgrenzen der Maschinen (VKM, EM1,EM2) aus dem Modul 5 und die aus dem Ladezustand der Batterie (ES) von Modul 6. In einem Unterblock 62 wird zwischen dynamischen Leistungsgrenzen mit oder ohne Mitwirkung des Fahrdynamikreglers (FD) unterschieden und entsprechend dieser Unterscheidung werden die Leistungsgrenzen in zwei Unterblocks 63,64 einer Minimum-Auswahl unterzogen. So werden im unteren Block 64 die Leistungsgrenzen weiter eingeschränkt, sodass die Dynamikanforderung bei möglichster Schonung der Batterie erfüllt wird.

Die Leistungsgrenzen werden sodann im Umrechnungsblock 57 für die in Frage kommenden AMGK unter Einbeziehung von Daten und Zwischenresultaten aus dem Modul, Systemzustandsanalyse M1, in Drehmomentgrenzen umgerechnet. Die Leistungsgrenze aus dem Unterblock 63 ergibt die maximalen Momente bei Dauerleistung; die aus dem Unterblock 64 die maximalen Momente bei Sekundenleistung. Diese eingeschränkten Grenzen werden der Wirkungsgradberechnung in Modul 8 dann als Grenzen für die Optimierung vorgegeben und auch dem Dynamik - Bewerter (M11) zur Verfügung gestellt.

Der Block Start-Stop-Flag 66 wird in diesem Modul vom Fahrdynamikkregler FD und vom Ladezustand (Modul 6) beeinflusst, zum Beispiel, um bei Befahren einer Steigung das Abstellen der VKM zu verhindern, da schnell hohe Momente gefordert werden können. Sie wird dann nicht abgestellt.

### Modul 8: Arbeitspunkt / Wirkungsgradberechnung

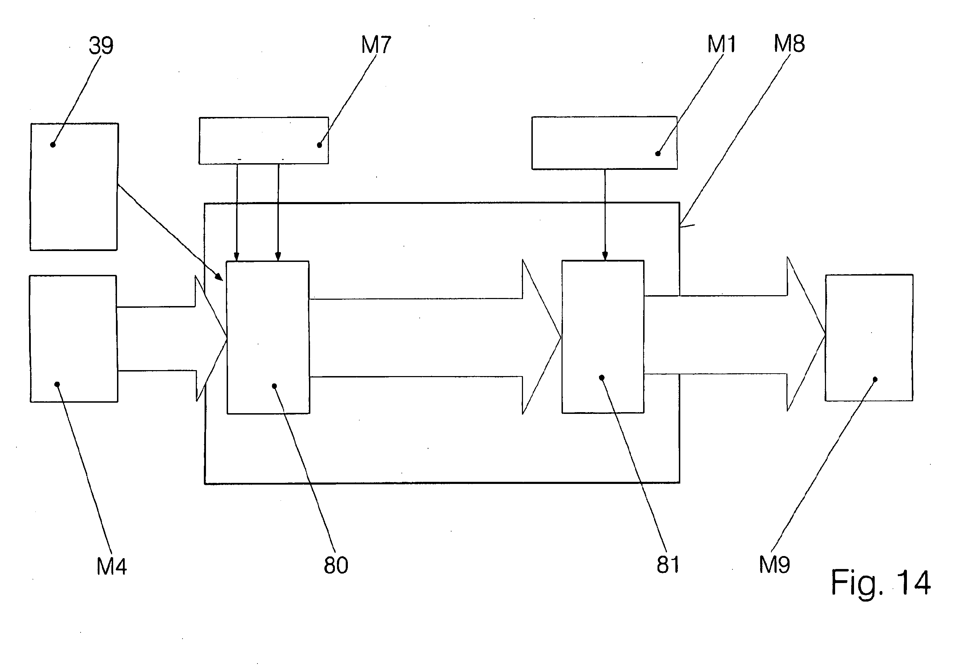

**Fig. 14** stellt die Softwarestruktur der Wirkungsgradberechnung / Arbeitspunktoptimierung dar. Für jede AMGK wird genau ein lokal optimaler Arbeitspunkt bestimmt. Der Modul 8 ist eingangsseitig mit dem Modul "Gangvorwahl" (M4) verbunden und erhält weitere Eingaben von der Systemzustandanalyse (M1), vom Dynamikmanagement (M7), und die mechanisch bedingten Grenzmomente vom Block 39 des Moduls Komponentenverfügbarkeit M3. Die Optimierung erfolgt in zwei Schritten, "Bestimmung Arbeitspunkt" (Block 80) und "Berechnung Wirkungsgrad" (Block 81).

### 1. Bestimmung des Arbeitspunktes

Für jede AMGK wird jener Arbeitspunkt der drei Maschinen (EM1, EM2 undVKM) bestimmt, der den besten Gesamtwirkungsgrad für die geforderte Momentenverteilung darstellt, in Abhängigkeit von einem Eingriff des Fahrdynamikreglers FDR. Der Bereich, in dem die Optimierung erfolgt, wird vom "Dynamikmanagement" (M7) unter Berücksichtigung der Vorgaben von Wärmemanagement (M5) und Ladungsmanagement (M6), welche die physikalischen Grenzen weisen, mittels Momentengrenzen vorgegeben. Die Momentengrenzen von der Komponentenverfügbarkeit (Getriebeschutz) werden in der Bestimmung des Arbeitspunktes berücksichtigt. Liegt der Fahrerwunsch außerhalb des darstellbaren Bereichs, wird der für die jeweilige AMGK maximal darstellbare Arbeitspunkt ermittelt.

Die aktuelle Drehzahl der Maschinen ist generell durch die aktuelle Fahrzeuggeschwindigkeit und die aktuelle Gangstufe bestimmt und wird von der Systemzustandsanalyse (M1) geliefert. Die Variation des Arbeitsbereichs erfolgt primär durch eine Umverteilung der Momente zwischen den Maschinen. Somit sind mit der Momentenverteilung die Arbeitspunkte durch Moment und Drehzahl definiert. In Ausnahmefällen (z.B serieller Betrieb) ist die Drehzahl erst nach der Arbeitspunktsbestimmung definiert.

Zur Bestimmung des Arbeitspunktes werden zunächst die AMK nach der Momentenverteilung kategorisiert:

### a.) nur eine EM ist eingeschaltet, VKM ist ausser Betrieb oder im Leerlauf

zum Beispiel: AMK 6/10/20/21 (siehe Fig. 3)
Das E-Maschinenmoment für die eingeschaltete E-Maschine entspricht dem Fahrerwunschmoment, alle anderen Maschinenmomente sind null.

### b.) nur die VKM ist in Betrieb

AMK 2/29 (siehe Fig. 3)
Das VKM-Moment entspricht dem Fahrerwunschmoment, alle anderen Maschinenmomente sind null.

### c.) Allradmodus und zwei Maschinen sind eingeschaltet

AMK 1/3/13/33 (siehe Fig. 3), erfordert eine Fallunterscheidung:

c1) VKM und EM2 sind eingeschaltet

AMK1/33 (siehe Fig. 3)

Wenn ein Traktionseingriff des Fahrdynamikreglers (FDR) vorliegt, sind die beiden Achsmomente und somit auch die Maschinenmomente eindeutig vorgegeben. Wenn kein Traktionseingriff des Fahrdynamikreglers (FDR) vorliegt, ist die Aufteilung der Momente zwischen der VKM und der EM2 variabel, eine Optimierung hinsichtlich bestem Wirkungsgrad ist durch Verschiebung der Momente bei fixer Drehzahl möglich. Der Bereich des für die Optimierung in Frage kommenden Moments (die Drehzahl ist fix) wird durch die Momentengrenzen sowie den Getriebeschutz bestimmt.

c2) EM1 und EM2 sind eingeschaltet

(AMK 3/13)

AMK 3: Aufladen der Batterie mit beiden EM

Diese AMK wird nur durch Traktionseingriff des Fahrdynamikreglers (FDR) aktiviert, dann gibt der Fahrdynamikregler auch beide Achsmomente eindeutig vor und auch die Maschinenmomente sind eindeutig bestimmt.

AMK 13: Rein elektrischer Allradantrieb

Wenn ein Traktionseingriff des Fahrdynamikreglers (FDR) vorliegt, gibt er auch beide Achsmomente und somit auch die Maschinenmomente eindeutig vor. Wenn kein Traktionseingriff des Fahrdynamikreglers (FDR) vorliegt, ist die Aufteilung der Momente zwischen EM1 und EM2 variabel, eine Optimierung hinsichtlich besten Wirkungsgrad ist durch Verschiebung der Momente bei fixer Drehzahl möglich.

**d.) nur Moment an die Hinterachse und VKM und EM1 sind ein- und EM2 ist ausgeschaltet, AMK 28/30 (siehe Fig. 3)**

In diesem Fall gilt die Forderung, dass das gesamte Fahrerwunschmoment an die Hinterachse geliefert wird. Die Aufteilung der Momente zwischen VKM und EM1 ist variabel, eine Optimierung hinsichtlich bestem Wirkungsgrad ist durch Verschiebung der Momente bei fixer Drehzahl möglich. Der Bereich des für die Optimierung in Frage kommenden Moments (Drehzahl ist fix) wird durch die Momentengrenzen vom Dynamikmanagement (M7) sowie dem Getriebeschutz des Moduls Komponentenverfügbarkeit (M3) bestimmt.

**e.) Allradmodus und alle Maschinen eingeschaltet**

AMK32/AMK34, auch hier erfolgt eine Fallunterscheidung**

e1) EM1 arbeitet generatorisch, VKM und EM1 motorisch (AMK 32)

Diese AMK wird nur durch Traktionseingriff des Fahrdynamikreglers (FDR) aktiviert, der eine eindeutige Verteilung der Achsmomente vorgibt. Die EM2 muss das Vorderachsmoment liefern, die Verteilung zwischen VKM und EM1 ist frei wählbar. Die Optimierung des Momentes von der EM1 und der VKM erfolgt wie unter **d**.).

e2) Alle drei Maschinen arbeiten motorisch (AMK34)

Wenn ein Traktionseingriff vorliegt, gibt der FDR beide Achsmomente eindeutig vor. Die EM2 muss das Vorderachsmoment liefern, die Verteilung zwischen VKM und EM1 ist frei wählbar. Die Optimierung der Momente der EM1 und der VKM erfolgt wie unter **d**.)

Liegt kein Traktionseingriff vor, ist die Aufteilung der Momente zwischen VKM, EM1 und EM2 variabel. Es wird versucht, mit EM2 die Vorgaben des Fahrdynamikreglers (FDR) darzustellen, das restliche Summenmoment wird von der EM1 und der VKM aufgebracht. Eine Optimierung hinsichtlich bestem Wirkungsgrad ist durch Verschiebung der Momente zwischen der VKM und der EM 1 bei fixer Drehzahl möglich.

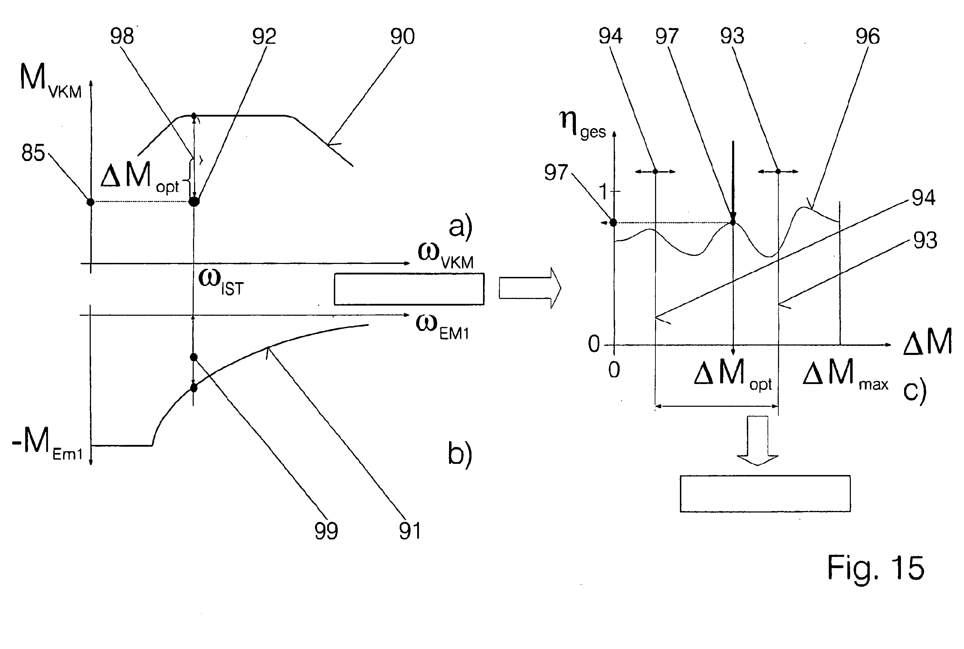

Es folgt eine genaue Beschreibung der Vorgangsweise, die für die Ermittlung der Momentenverteilung mit optimalem Wirkungsgrad exemplarisch ist, anhand der **Fig.15** und der **AMK 28** (VKM und EM1 treiben die Hinterachse, EM2 ist ausgeschaltet, reiner Hinterradantrieb). Fig 15 setzt sich dazu aus drei Diagrammen zusammen: Diagramm a) zeigt die Vollastkurve 90 der VKM (das Moment über der Drehzahl), Diagramm b) zeigt die Vollastkurve 91 der EM1, und Diagramm c) zeigt den Wirkungsgrad auf der Ordinate über dem Differenzmoment.

In einem ersten Schritt wird das Fahrerwunschmoment $M_{FW}$ auf den Getriebeeingang umgerechnet, mit dem maximalen Getriebeeingangsmoment aus dem

Modul Komponentenverfügbarkeit (M3) beschränkt und mit der aktuellen Drehzahl (Fahrgeschwindigkeit) $\omega_{IST}$ verknüpft. So erhält man den Punkt 92.

In einem zweiten Schritt werden die Momentengrenzen für die Optimierung des Wirkungsgrades bestimmt. Die Momentengrenzen aus dem Dynamikmanagement M7 (Volllastkurven 90 der VKM in Fig. 15a) und 91 der EM1 in Fig. 15b) beschreiben die maximalen Momente $M_{VKM\_max}$, $M_{EM1\_max}$ der Maschinen für die aktuelle AMGK. Das Moment, das die VKM noch über den Fahrerwunsch $M_{FW}$ hinaus abgeben kann (der vertikale Abstand des Punktes 92 von der Kurve 90), ist die Momentenreserve der VKM ($\Delta M_{MaxVKM}$), ein Differenzmoment. Wenn dieses von der EM1 aufgebracht werden kann, so ist dies die obere Momentengrenze $\Delta M_{Max}$ (siehe Fig. 15c) für die Optimierung. Andernfalls reduziert sich die Momentenreserve auf das Maximalmoment von EM1 ($\Delta M_{MaxEM1}$).

Die obere Momentengrenze $\Delta M_{Max}$ wird durch Minimum-Auswahl aus den maximalen Momenten ($\Delta M_{VKM\_max}$, $\Delta M_{EM1\_max}$) der beiden Maschinen für die aktuelle AMGK erhalten. Die untere Momentengrenze ($\Delta M_{Min}$) für die Optimierung ist nur bestimmt durch das minimale Moment der EM1, das im Modul Ladungsmanagement M6 ermittelt wird. Das sind die Optimierungsgrenzen $\Delta M_{min}$, $\Delta M_{max}$ (vertikale Gerade) in Fig. 15c.

Im dritten Schritt wird innerhalb der Optimierungsgrenzen $\Delta M_{min}$, $\Delta M_{max}$ der Arbeitspunkt besten Wirkungsgrades bestimmt, der auch gleichzeitig die Momente der EM1 und der VKM festlegt. Das ist in Fig. 15c zu sehen, in der der Wirkungsgrad über dem Differenzmoment AM aufgetragen ist. Die wellenförmige Kennlinie 96 des Gesamtwirkungsgrads ergibt sich aus der Überlagerung der Wirkungsgradkennfelder der beiden Maschinen VKM und EM1 (im Hintergrund des Diagramms, nicht zu sehen), für das $\Delta M_{Max}$. Der höchste Punkt 97 auf der Wellenlinie 96 zwischen den Grenzen $\Delta M_{Min}$ und $\Delta M_{Max}$ ist der optimale Arbeitspunkt. Er entspricht dem optimalen Differenzmoment $\Delta M_{Opt}$ auf der Abszisse des Diagramms c).

Im letzten Schritt wird daraus das an den Maschinen einzustellende Moment ermittelt, wobei

$$M_{VKM} = M_{FW} + \Delta M_{Opt}$$
$$M_{EM1} = -- \Delta M_{Opt}$$

In den Diagrammen a) und b) entspricht dem $M_{VKM}$ der Punkte 98 und dem $M_{EM1}$ der Punkt 99.

### Ad. 2: Wirkungsgradberechnun

Die Wirkungsgradberechnung ermittelt für die in Frage kommenden AMGK den Gesamtwirkungsgrad in den Arbeitspunkten (definiert durch Moment und Drehzahl der Maschinen) für die unter "Bestimmung Arbeitspunkt" berechneten Momente, in Abhängigkeit des Systemzustands. Der Gesamtwirkungsgrad basiert auf dem gesamten Leistungsfluss in einer Wirkungsgradkette. Er setzt den Treibstoffverbrauch pro Zeiteinheit zu der abgegebenen mechanischen Leistung an den Rädern in Beziehung.

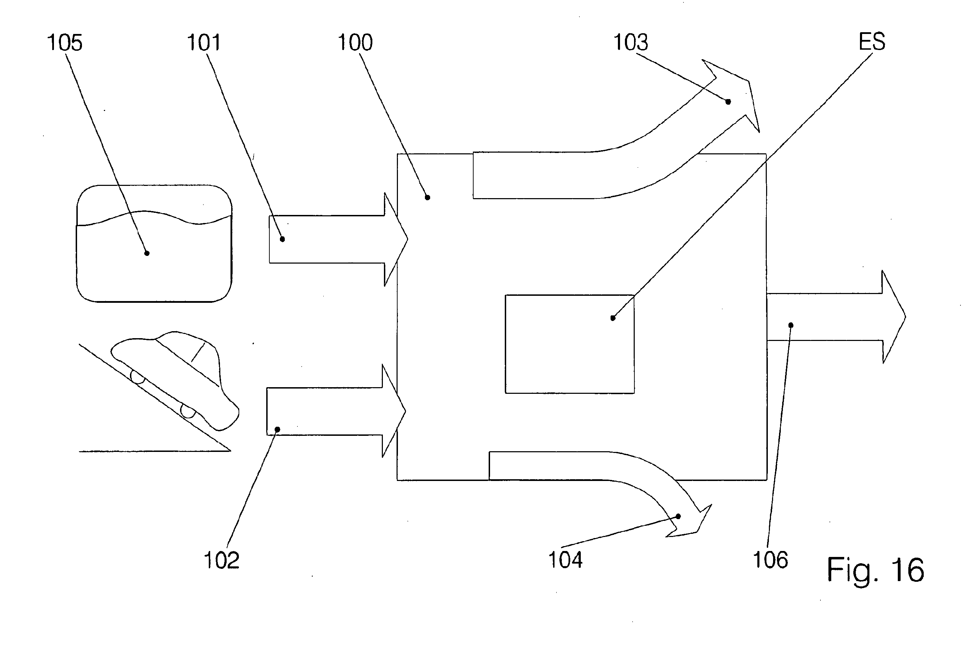

So wird zum Beispiel beim Laden der Batterie durch Rekuperation der Bremsenergie die Wirkungsgradkette von dem Tank 105 (in Fig.16) ("chemischer" Energiespeicher) über eine generatorisch betriebene elektrische Maschine, die Batterie und deren Umrichter, und zusätzlich die Wirkungsgradkette von der Batterie über die motorisch betriebene elektrische Maschine und die Kraftübertragung bis zu den Rädern berücksichtigt. Die in der Batterie gespeicherte elektrische Energie ist durch den zusätzlichen Kraftstoffverbrauch der VKM über die Wirkungsgradkette von der VKM bis zur Batterie in Beziehung gesetzt (durch $\eta_{OptLPAH\_dP}$), somit ergibt sich auch bei rein elektrischem Fahren ein virtueller Kraftstoffverbrauch. In der Folge kann auch der Wirkungsgrad in dieser Betriebsart bestimmt werden.

Der Wirkungsgrad ist der Quotient aus der auf die Straße abgegebenen Leistung und allen durch Treibstoff und durch Rekuperation zugeführten Leistungen; mit anderen Worten: er ist der Quotient aus der vom System abgegebenen Leistung und der Summe der dem System durch den Treibstoff der VKM und durch Rekuperation zugeführten Leistungen. Das ist in **Fig. 16** symbolisch dargestellt.

In **Fig. 16** ist die Energiezufuhr durch den Treibstoff aus dem Kraftstofftank (pfeil 101) und durch Rekuperation (Pfeil 102). Das System 100 ist das gesamte Fahrzeug mit seinem Hybrid-Antrieb und mit seinem Energiespeicher ES. Energieverluste entstehen im Antriebsstrang (Pfeil 103) und durch Nebenverbraucher (Pfeil 104). Die vom System abgegebene Leistung ist der Vortrieb (Pfeil 106).

Dabei ist zwischen Zugbetrieb (=positive Achsmomente) und Schubbetrieb (=negative Achsmomente) des Fahrzeuges zu unterscheiden. Eine Kombination von positiven und negativen Achsmomenten ist ausgeschlossen (keine AMGK). Bei den Leistungen sind immer die Absolutwerte anzusetzen.

### Modul 9: Bewerter Ladezustand (SOC)

Es ist Aufgabe dieses Moduls, die AMGK nach ihrem Einfluss auf den Batterieladezustand zu bewerten. Jene AMGK, die sich positiv auf den Ladezustand der

Batterie (ES) auswirken, werden gut, die anderen schlechter bewertet. Eine leere Batterie soll geladen werden, eine volle Batterie möglichst entladen.

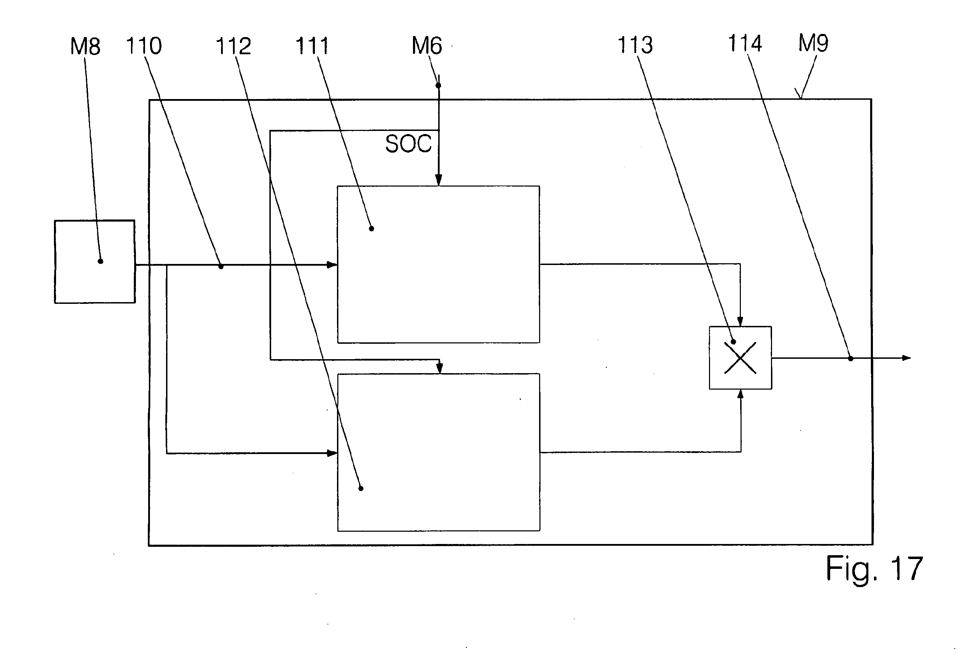

Der Modul Bewerter Ladezustand M9 schließt an den Modul Wirkungsgradberechnung M8 an und steht eingangsseitig auch mit dem Modul Ladungsmanagement M6 in Verbindung. Er gibt für alle in Frage kommenden AMGK eine Wertnote $BF_{SOC}$ aus. Die Ermittlung dieser für einen AMGK ist In Fig. 17 dargestellt. Das den geschätzten Leistungsbedarf für die Batterie ES (positiv: Batterie wird entladen, negativ: Batterie wird geladen) angebende Signal 110 ($HCU_{WBPhvBatt}$) kommt von der Wirkungsgradberechnung (M8) zu einem Block 111 (Stabilisation) und zu einem Block 112 (Leistungsbeanspruchung der Batterie). Das Signal 110 ($HCU_{WBPhvBatt}$) für jede zur Auswahl stehende AMGK ist ein eindeutiges Maß für deren Einfluss auf den Batterieladezustand.

Die Bewertung der Batterieleistung hinsichtlich des Ladezustandes erfolgt nach zwei Gesichtspunkten: Im ersten in Block 111 wird die AMGK spezifische Batterieleistung auf ihren Einfluss auf einen ausgeglichenen Ladezustand der Batterie ES (zwischen rund 40 und 70 % geladen) bewertet; nach dem zweiten (Block 112) wird die Leistungsbeanspruchung der Batterie bewertet.

Zur Bewertung des Ladezustandes (Stabilisation) in Block 111 stehen Wertnoten zwischen $BF_{SOCstabil} = 0$ und $BF_{SOCstabil} = 1$ zur Verfügung. Im Extremfall wird bei leerer Batterie eine AMGK mit maximaler Ladeleistung mit 1 und eine AMGK ohne Ladeleistung mit 0 bewertet, bei voller Batterie mit 0 beziehungsweise 1.

Zur Bewertung der Leistungsbeanspruchung der Batterie (Block 112): Der Modul Ladezustands-Management (M6) hat die Aufgabe, die Laderegelung der Batterie zu übernehmen und liefert damit die Grundlage für die Bewertung der Ladeleistung. Für die Entladegrenzen hinsichtlich mechanischer Leistungsfähigkeit (Moment) ist das Dynamikmanagement (M7) zuständig. Deshalb bewertet der Modul M9 auch die Entladeleistung der Batterie, um ein Entladen/Laden der Batterie bei unterschiedlichen AMGK überhaupt vergleichbar zu machen. Sehr geringe Leistungen sind für die Lebensdauer der Batterie günstig, sehr hohe sind schädlich. Entsprechend werden die Wertnoten $BF_{SOCLeistg}$ in dem Bereich zwischen 0 und 1 gewählt.

Die beiden Wertnoten $BF_{SOCstabil}$ und $BF_{SOCLeistg}$ werden in einem Block 113 durch Multiplikation zu einer Gesamtwertnote $BF_{SOC}$ zusammengeführt. Das entspricht einer Abwägung zwischen schnellem Erreichen des optimalen Ladezustands und schonender Ladung/Entladung der Batterie. Die multiplikative Verknüpfung bewirkt, dass eine sehr niedere Wertnote sehr starken Einfluss haben kann, was möglich ist, weil die Wertnoten nie ganz gleich Null sind.

## Modul 10: Bewerter Wärme

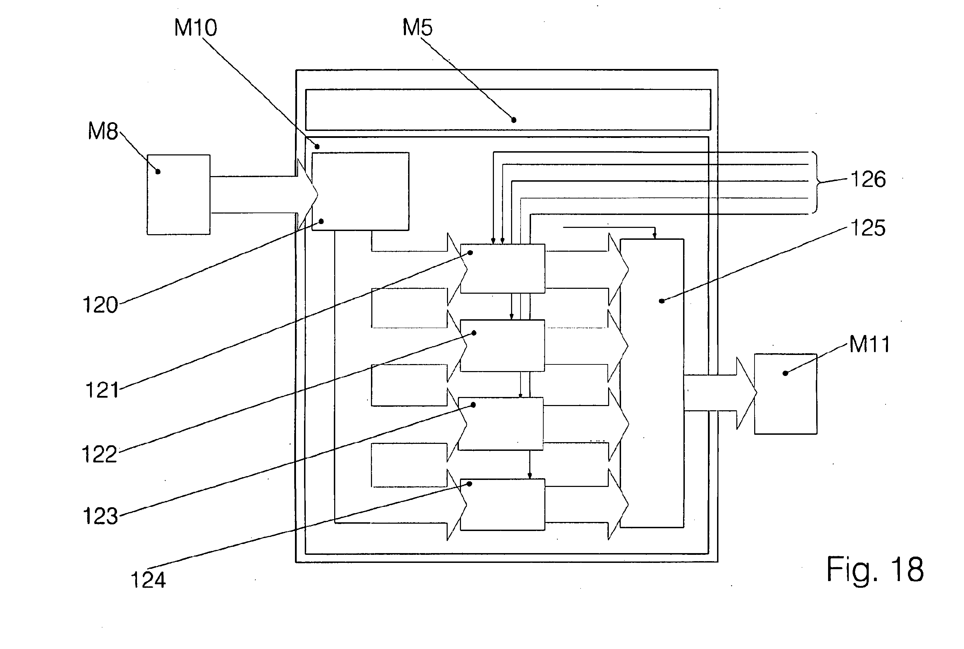

Der Bewerter Wärme hat die Aufgabe, durch Bewertung nach der thermischen Entwicklung der VKM, der E-Maschinen und der Batterie Einfluss auf die Auswahl einer AMGK zu nehmen. Für die thermischen Zustände dieser Komponenten ist die Verlustleistung im Arbeitspunkt maßgebend. Modul 10 steht eingangsseitig mit dem Modul Wirkungsgrad und Arbeitspunkt M8, mit dem Modul Wärmemanagement M5 und mit Temperatursensoren (nicht dargestellt) in Verbindung. In **Fig. 18** ist je ein Block (121-124) für die Berechnung und Bewertung der Verlustleistung jeder Komponente (VKM, EM1, EM2, ES) im Arbeitspunkt für alle in Frage kommenden AMGK, vorgesehen. Die einzelnen Wertnoten der parallelen Beurteilung der thermischen Entwicklung in den Komponenten werden in Block 125 zusammengeführt.

Dazu werden zunächst in Block 120 für jede in Frage kommende AMGK und die bereits in Modul M8 ermittelten Arbeitspunkte jeder Komponente die Verlustleistungen aus den Momenten und Drehzahlen der einzelnen Maschinen und aus deren Einzelwirkungsgraden (auch aus Modul M8) berechnet. Aus diesen werden dann unter Berücksichtigung der Temperaturen (126) der Komponenten in den Blocks 121 bis 124 die Einzelwertnoten BF ermittelt, und zwar im Block 121 $Bf_{WärmeVKM}$ für die VKM, 122 $BF_{WärmeEM1}$ für die EM1, 123 $BF_{WärmeEM2}$ für die EM2 und 124 $BF_{WärmeBatt}$ für die Battere (ES).

## Berechnung der Wertnote $BF_{WärmeVKM}$ der Verbrennungskraftmaschine

Die Gesamtbewertung in Block 121 wird geteilt in die bestmögliche Erreichung der Optimaltemperatur (eigentliches Wärmemanagement), in die Beurteilung des entstehenden Treibstoffdurchsatzes in Abhängigkeit der Temperatur, die Vermeidung zu hoher Temperaturen und die Lebensdauer der Verbrennungskraftmaschine. Sowohl "Gewährleistung der Erwärmung", als auch "Beurteilung des Treibstoffdurchsatzes bei niedrigen Temperaturen" ermitteln ihre Wertnoteen aus der Verlustleistung und der Temperatur der VKM.

## Berechnung der Wertnote $BF_{WärmeEM1}$ und $BF_{WärmeEM2}$ für EM1 und EM2

In Block 122 und 123 wird die Wertnote für die Verlustleistung der E-Maschinen ermittelt. Eine einfache Abschätzung des zu erwartenden thermischen Zustandes besteht zum Beispiel darin, die Verlustleistung der E-Maschine in den in Frage kommenden AMGK zu der Verlustleistung in Beziehung zu setzen, die momentan bei maximaler Leistung auftreten würde. So kommt man für jede der beiden E-Maschinen zu einer Wertnote $BF_{BWEM1}$ und $BF_{BWEM2}$ welche wieder zwischen 0 und 1 liegt. Dabei ergibt sich die beste Bewertung bei einer Verlustleistung von 0 und die schlechteste Bewertung bei maximaler Verlustleistung. Dadurch werden AMGK bevorzugt, bei denen die Maschinen abkühlen können, wenn sie heiß sind.

<u>Berechnung des Wertnote BF<sub>WärmeBatt</sub> der Batterie</u>

Bewertet werden soll für die gewünschte Batterieleistung im Arbeitspunkt der stationäre Endwert der Batterietemperatur und die Tendenz der Wärmeentwicklung. Der Wertnote für die Temperatur der Batterie wird daher in 2 Teile aufgeteilt, welche addiert werden. Die Addition wird gewählt, weil selbst bei einem außerhalb des erlaubten Temperaturbandes liegenden stationären Endwert der Wertnote nicht 0 werden darf. Die höchste Wertnote wird vergeben, wenn die Optimaltemperatur erreicht wird. Da es sich um eine von zwei in eine Addition eingehende Wertnoten handelt, ist der maximale Wert für die Wertnote $BF_{BWBatt1} = 0{,}5$. Liegt der Wert für die Endtemperatur außerhalb eines erlaubten Bandes, kann es nur eine Wertnote $BF_{BWBatt1} = 0$ geben.

In Block 125 wird aus den einzelnen Wertnoten aus den Blocks 121 - 124, $BF_{BWVKM}$, $BF_{BWEM1}$, $BF_{BWEM2}$ und $BF_{BWBatt}$ durch <u>Multiplikation</u> eine Gesamtwertnote $BF_{BWGesamt}$ berechnet, wobei die einzelnen Wertnoten mit Gewichtungsfaktoren versehen sein können. Dabei besteht auch die Möglichkeit, einzelne Wertnoten ganz auszublenden.

## Modul 11: Bewerter Dynamik

Der Bewerter Dynamik soll alle AMGK hinsichtlich ihrer Dynamik bewerten. Es ist seine Aufgabe, die Höhe des Momentes jeder AMGK nach der Abweichung vom Fahrerwunsch FW zu bewerten. Die Wertnote Dynamik ($BF_{Dynamik}$) wird aus Teilbewertungen für die Momentenhöhe und für das Beschleunigungsvermögen (aus der Zugkraftreserve und der Bewertung der Lage des Arbeitspunktes) ermittelt.

Der Bewerter Dynamik M11 steht eingangsseitig direkt mit dem Bewerter Wärme (M10), indirekt mit dem Modul Arbeitspunkt/Wirkungsgrad (M8) und mit dem Modul Dynamik-Management (M7) in Verbindung und liefert ausgangsseitig die Wertnote Dynamik $BF_{Dynamik}$.

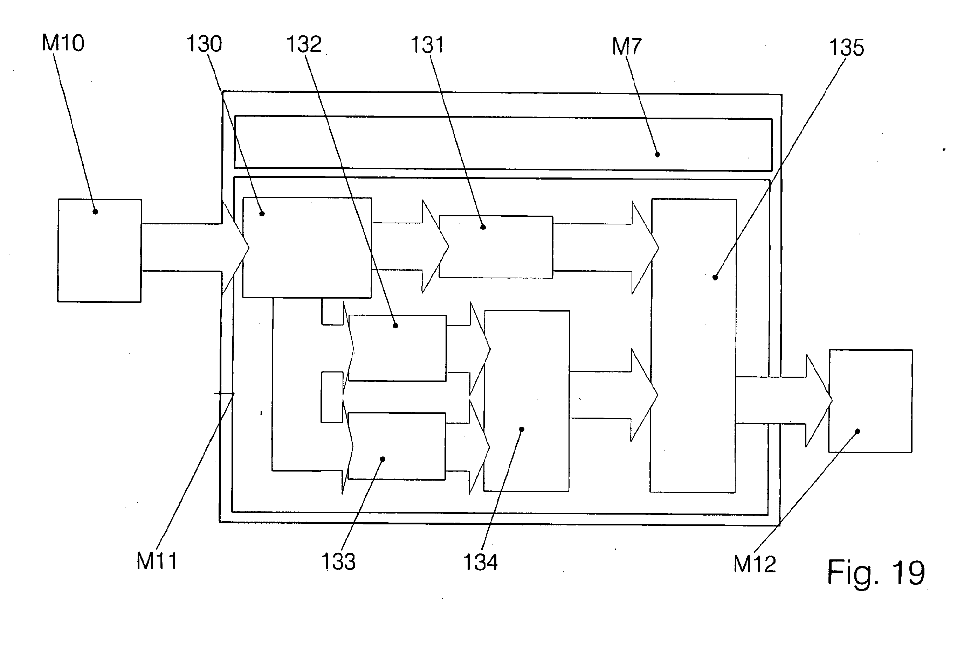

In **Fig. 19** sind die dafür bestimmten Blocks eingezeichnet: ein Block 130 "Berechnung Gesamtachsmoment", ein Block 131 "Bewertung Momentenhöhe", ein Block 132 "Bewertung Zugkraftreserve", ein Block 133 "Bewertung Arbeitspunkt", ein die Ergebnisse der Blocks 132 und 133 zusammenfassender Block 134 "Bewertung Beschleunigungverrnögen" und schließlich ein die Ergebnisse von Block 131 und Block 134 zusammenfassender Block 135 "Berechnung Wertnote Dynamik".

Da das Summenachsmoment aus Modul M2 von dem vom Fahrdynamikregler FDR vorgegebenen wegen mangelnder Leistungsreserve einer der Komponenten abweichen kann, muss es aus den Arbeitspunkten für jede AMGK neu berechnet werden. Die Berechnung wird im Block 130 durchgeführt, weil der Ausgangswert außer im Bewerter Dynamik auch weiter unten im Komfortfilter benötigt wird. Das Moment einer AMGK ergibt sich aus der Addition der Momente für alle drei Maschinen in den Betriebspunkten (aus Modul 8) unter Berücksichtigung der jeweiligen Übersetzungen zu:

$$M_{AP} = (M_{AP,VKM} + M_{AP,EM1}) * i_{Gang} * i_{HAD} + M_{AP,EM2} * i_{VAD}$$

In Block 131 wird das in Block 130 ermittelte Summenachsmoment bewertet. Die Bewertung der Momentenhöhe ist bei Zug- und Schubbetrieb gleich. Die Wertnote liegt zwischen 0 und 1. Die Beziehung zwischen der Wertnote und der Abweichung kann eine lineare sein. Vorteilhaft ist es, die Beziehung anhand einer parametrisierbaren Kurve herzustellen, die bei Nicht-Erfüllbarkeit des Fahrerwunsches sehr steil vom Wert 1 abfällt.

In Block 132 wird die Zugkraftreserve bewertet. Damit soll neben der statischen Betrachtung der Momentenhöhe eine dynamische Betrachtung des Beschleunigungsvermögens möglich werden. Unter "Zugkraftreserve" ist hier und im Folgenden immer ein Moment zu verstehen. Je nach Fahrsituation muss durch die Schaltstrategie eine Zugkraftreserve vorgehalten werden. Die Betrachtung der Zugkraftreserve ist nur für den Zug-Betrieb sinnvoll.

Zur Bewertung der Zugkraftreserve muss die aktuelle Zugkraftreserve jeder AMGK berechnet und mit der gewünschten Zugkraftreserve verglichen werden. Zusätzlich ist es von Bedeutung, ob die Zugkraftreserve mit der Verbrennungskraftmaschine oder einer E-Maschine aufgebracht wird. Die Bewertung der Höhe der Zugkraftreserve findet in drei Schritten statt. Zunächst wird die aktuelle Zugkraftreserve für jede (Zug-)AMGK bestimmt. Im Anschluss wird die gewünschte Zugkraftreserve gebildet und schließlich wird sie mit der aktuellen verglichen. Alles das ist im Block 132 vereint.

<u>Berechnung der aktuellen Zuskraftreserve</u>

Es wird für jede AMGK die Zugkraftreserve bestimmt. Die Zugkraftreserve ist die Differenz zwischen dem aktuell von den Maschinen abgerufenen Moment und dem maximal möglichen Moment - ohne dazu kuppeln oder schalten zu müssen. Das bedeutet, dass z.B. bei reinem Verbrennungskraftmaschine -Hinterachsantrieb dazu das Maximalmoment der Verbrennungskraftmaschine, das der EM1 (ist angekuppelt und könnte bei Bedarf sofort bestromt werden) und bei geschlossener K3 das der EM2 betrachtet werden muss. Dabei ist es unerheblich, dass zum Abrufen des Momentes der EM1 die AMGK gewechselt werden muss. Daher ist die Bestimmung der Zugkraftreserve nicht AMGK-spezifisch, sondern von der Kupplungsstellung und der verfügbaren Leistung der Maschinen abhängig.

Die gesamte Zugkranreserve entspricht der Addition aus den Zugkraftreserven der VKM und der E-Maschinen:

$$M_{Res} = M_{Res,VKM} + M_{Res,EM}$$

Alle anderen AMGK betreffen nicht den Zugbetrieb. Diese AMGK werden einheitlich mit "1" bewertet.

Berechnung der Zugkraftreserve nach Fahrerwunsch

Die aus dem Fahrerwunsch abgeleitete Zugkraftreserve wird noch in Abhängigkeit von Dynamikfaktor und Steigung verändert. Die Größe der Zugkraftreserve wird im Block 132 ähnlich wie die Momentenhöhe im Block 131 mit einer Wertnote zwischen 1 und (beinahe) 0 bewertet.

In dem Block 132 erfolgt die Bewertung der Zusammensetzung der Zugkraftreserve. Nicht nur die bloße Bereitstellung der gewünschten Zugkraftreserve ist von Bedeutung, sondern auch deren Zusammensetzung. Eine Zugkraftreserve, die rein mit E-Maschinen anstatt mit Verbrennungskraftmaschine aufgebracht wird, hat den Vorteil, dass sie schneller zur Verfügung steht. Zudem hat die Zugkraftreserve mit E-Maschi-nen den Vorteil, dass sie nicht - wie eine VKM - durch einen ungünstigen Arbeitspunkt "erkauft" werden muss. In dem Block 132 wird aus der Zusammensetzung der Zugkraftreserve die Wertnote $BF_{ZUS}$ bestimmt, bei Annahme einer linearen Beziehung zwischen Zusammensetzung und Wertnote nach der Gleichung:

$$BF_{ZUS} = M_{ReserveVKM} / (M_{ReserveVKM} + M_{ReserveEM})$$

Im Block 133 Bewertung Arbeitspunkt wird der Tatsache Rechnung getragen, das nicht nur die bloße Bereitstellung des FW-Momentes von Bedeutung ist, sondern auch dessen Zusammensetzung. Ein Arbeitspunkt, der mit einem großen E-Maschinen-Anteil dargestellt wird, führt im Falle einer Beschleunigung zu besseren Beschleunigungswerten als ein Arbeitspunkt der zum großen Teil mit der Verbrennungskraftmaschine abgedeckt wird. Das wird mit einer weiteren Wertnote $BF_{AP}$, die zwischen 0 und 1 liegt bewertet. Die Wertnote berechnet sich bei linearem Zusammenhang wie folgt:

$$BF_{AP} = M_{VKM} / (M_{VKM} + M_{EM1} + M_{EM2})$$

Zur Bewertung des Beschleunigungsvermögens werden in Block 134 die Wertnoten $BF_{RES}$ von Block 132 und $BF_{AP}$ von Block 133 zusammengefasst. Wird während stationärer Fahrt nur eine geringe potentielle Beschleunigung vorgehalten, kann bei Beschleunigung auch nur diese geringe abgerufen werden. Daher müssen sowohl die Zugkraftreserve (aller Maschinen insgesamt), als auch die Zusammensetzung der Zugkraftreserve aus den Zugkraftreserven der einzelnen Maschinen im Arbeitspunkt des Arbeitpunktes bewertet werden.

Die Zugkraftreserve ist relevant für eine potentielle Beschleunigung. Sie ist daher haptsächlich dann von Bedeutung, wenn gerade nicht beschleunigt wird. Die Zusammensetzung des Arbeitspunktes ist dagegen nur dann von Bedeutung wenn das Fahrzeug gerade beschleunigt wird. Die Bewertung von Zugkraftreserve und Arbeitspunkt wechseln sich je nach Höhe des Faktors E-Dyn ab. Es ist sinnvoll, hier den gleichen Dynamik-Faktor anzusetzen, der auch im Dynamik-Management genutzt wird, da dort durch diesen Dynamik-Faktor der EM-Anteil des Arbeitspunktes beeinflusst wird.

In Block 135 erfolgt die Berechnung der Wertnote Dynamik $BF_{DYN}$ aus den beiden Teilwertnoten für die Momentenhöhe und das Beschleunigungsvermögen beziehungsweise für die Zugkraftreserve und die Lage des Arbeitspunktes aus den Blocks 131 bis 134.

**Modul 12: Bildung der Gesamt-Wertnote**

In der einfacheren Form wird nur ein rein multiplikativer Zusammenhang zwischen den Wertnoten angenommen und keine weitere Abhängigkeit berücksichtigt. Die Gesamt - Wertnote $BF_{Gesamt}$ ergibt sich dann zu:

$$BF_{Gesamt} = \eta * BF_{Dynamik} * BF_{W\ddot{a}rme} * BF_{SOC}$$

Der Wertebereich aller Wertnoten liegt zwischen 0 und 1, deshalb liegt aufgrund der rein multiplikativen Verknüpfung der Wertebereich für $BF_{Gesamt}$ ebenfalls zwischen 0 und 1. In Verfeinerung der einfachen Multiplikation können die einzelnen Wertnoten und der Wirkungsgrad $\eta$ (aus dem Modul 8) zuvor mit Gewichtungsfaktoren versehen sein.

**Modul 13: Komfortfilter**

In diesem Modul wird die aktuelle (alte) AMGK mit ihren den Betriebszustand des Fahrzeuges beschreibenden Werten mit den in Betracht kommenden AMGK einschließlich ihrer berechneten Arbeitspunkte verglichen. Der Komfortfilter ist für den Übergang von einer AMGK zur anderen zuständig und nimmt Einfluß auf die Gesamtwertnote der AMGK.

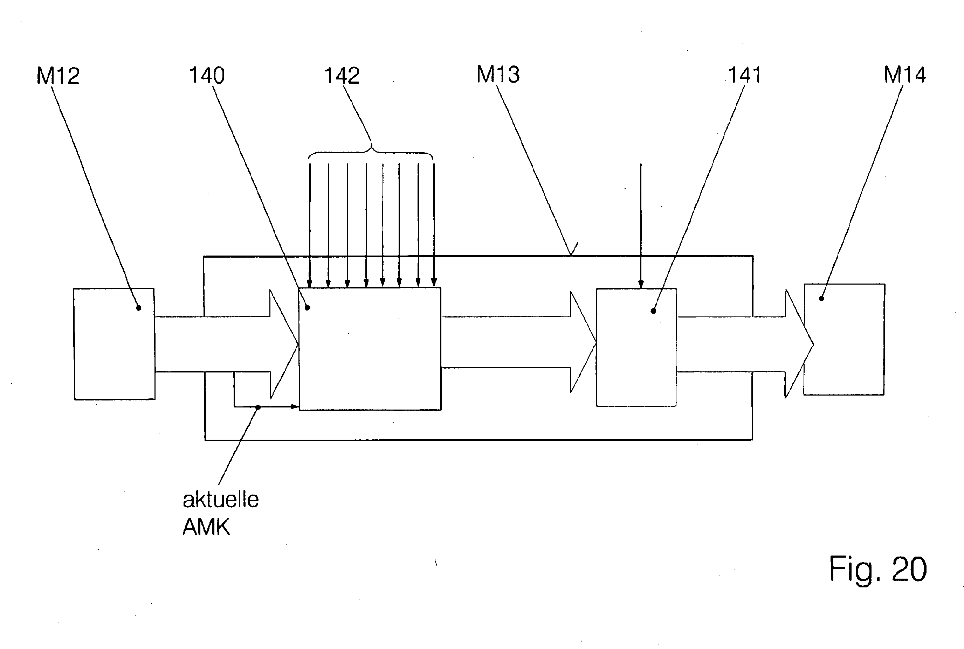

In **Fig. 20** ist die Softwarestruktur des Komfortfilters dargestellt, in dem zunächst der Wechsel von der aktuellen AMGK auf die zu vergleichende AMGK nach verschiedenen Kriterien beurteilt wird. Der Modul ist eingangsseitig mit dem Modul Gesamtbewertung M 12 und so indirekt auch mit dem Modul Bewerter Dynamik M11, sowie mit dem Modul Systemzustandanalyse M 1 und mit der Konditionierungseinheit 11 verbunden, die den aktuellen Betriebszustand beschreibende aktuelle Größen 142 (Gang, Achsmomente, Fahrpedalwinkel, Maschinendrehzahlen, Fahrzeuggeschwindigkeit) liefert. Er umfasst einen Block 140 zur Beurteilung der durch einen AMGK-Wechsel verursachten Störungen und einen Block 141 zur Bewertung des Gesamt - Komforts.

Folgende Symptome sind zu beurteilen, weil sie beim Wechsel der AMGK den Komfort stören können:

- unpassendes Schaltverhalten
- zu häufige Drehzahl- oder Drehmomentwechsel der Verbrennungskraftmaschine
- Geräusche der Verbrennungskraftmaschine
- Betragsmäßige Zugkraftunterbrechung
- zu häufige Zugkraftunterbrechungen
- Momentenwechsel zwischen den Antriebsachsen.

Alle einzelnen Beurteilungen werden an den Block 141 "Filterung und Bewertung" weitergegeben.

Bei der Beurteilung der Geräuschentwicklung der VKM wird davon ausgegangen, daß deren Geräusche voneinander unabhängig durch das Moment und die Drehzahl verursacht werden. Bei der Beurteilung der Geräusche kann mit guter Näherung eine leistungsproportionale Zunahme angenommen werden. Sowohl die Momente der aktuellen AMGK und der zu bewertenden AMGK als auch die Drehzahl (somit die Drehmomenten- und Drehzahlsptrünge) wurden im Modul 8 berechnet und stehen hier zur Verfügung.

Eine Zugkraftunterbrechung, zum Beispieles beim Gangwechsel oder beim Start mittels einer der elektrischen Maschinen (Soft Start) kann dank der Erfindung teilweise ausgegelichen werden. Die für den Fahrer spürbare Folge eines Zugkraftausfalls ist eine Differenz in der Beschleunigung $\Delta a$ (ein Ruck). Diese ist weder vom Gesamtachsmoment ($M_{Soll}$) vor der Unterbrechung abhängig, noch vom Fahrwiderstand (aus Geschwindigkeit und Steigung), sondern nur vom absoluten Wert des Momentenrückgangs.

Im Block 141 (Filterung und Bewertung) werden dann für alle verbliebenen AMGK weitere Wertnoten gebildet, die zu der Gesamt-Wertnote $BF_{ges}$ addiert, also hinzu gezählt, werden. Einzelne Komfort - Bewertungen können ein- und ausgeschaltet werden.

**Modul 14: Sortierer**

In diesem Modul werden die noch möglichen AMGK nach ihrer Gesamtwertnote $BF_{Gesamt}$, vermehrt um die Wertnote $BF_{Komfort}$ (so vorhanden), sortiert, die mit der höchsten Bewertung obenauf. Es werden nur die AMGK, bei denen der KO-Vektor = 1 (also nicht 0, denn 0 bedeutet "knock-out") ist, in die Sortierung einbezogen. Falls es zwei AMGK mit gleichem (eventuell in einer kleinen Bandbreite) Gesamt-Wertnoten gibt, muss zunächst die AMGK den Vorrang bekommen, welche aktuell gerade eingestellt ist. Die Sortierung wird im KO-Vektor abgelegt. Statt einer "1" enthält der KO-Vektor dann also die Sortierung der jeweiligen AMGK, einen Wert zwischen 0 und 1. AMGK, bei denen vor der Sortierung der KO-Vektor = 0 war, bleiben unverändert.

**Modul 15: Statusmaschine AMK**

Der Modul Statusmaschine (AMK) befindet sich am Ende der Filterkette des ganzen Hybridreglers HCU. Er erhält vom letzten Modul des Filterkettenblocks, dem Sortierer (M14) die Liste der nach Wertnoten und Wirkungsgrad sortierten AMGK und er erst vollzieht daraus schließlich die Auswahl unter Berücksichtung der Applizierbarkeit. Anhand der ausgewählten AMGK* wird die Schnittstelle zum Momentenkoordinator M 16 aufbereitet.

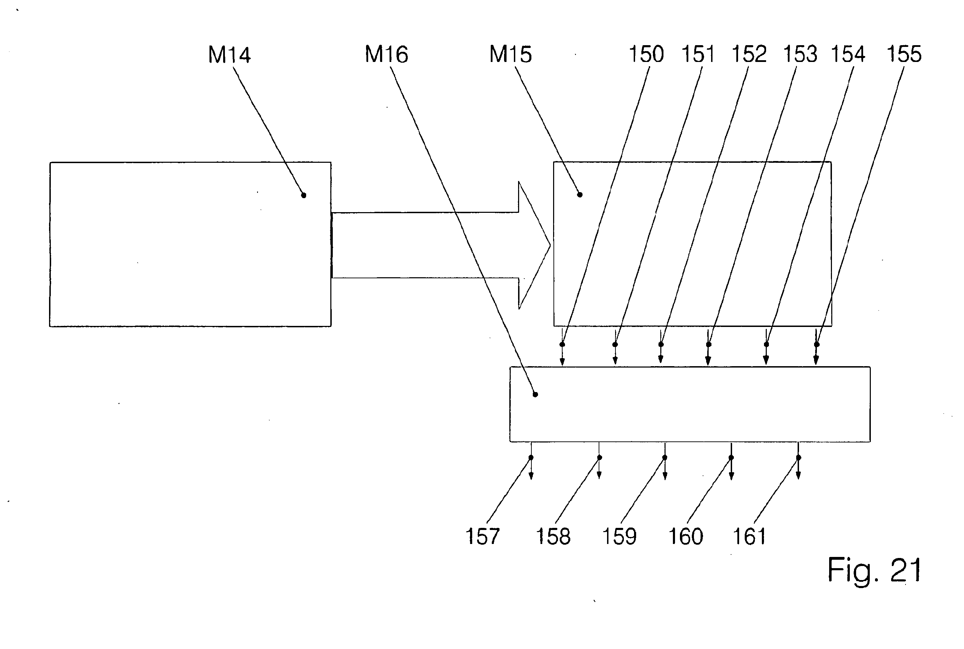

**Fig. 21.** zeigt den Modul 15 als Bindeglied zwischen dem Modul Sortierer M14 und dem Momentenkoordinator M16. Die folgenden Signale (sie haben durch die Auswahl das Suffix "soll" erhalten) müssen über die jeweils aufbereiteten Schnittstellen zum Momentenkoordinator geführt werden, der die Sollwerte

- Das Sollmoment der VKM: $M_{VKMSoll}$
- Das Sollmoment der EM1: $M_{Em1Soll}$
- Das Sollmoment der EM2: $M_{Em2Soll}$
- Den Soll-Getriebgang: $G_{SGSoll}$
- Kommandos für die jeweils zu schaltenden Kupplungen K1 - K4
- Diverse weitere Kommandos (z.B. Start-Stop).

mit entsprechenden Routinen und Zeitverläufen umsetzt in einen Getriebegang G, ein Drehmoment der VKM, ein Drehmoment (Drehmomente positiv oder negativ) der einzelnen elektrischen Maschinen EMI, EM2, und Kupplungsstellungen

**Patentansprüche**

1. Verfahren zum Steuern des Hybridantriebs eines Kraftfahrzeuges, welcher Hybridantrieb folgende Komponenten umfasst: eine Verbrennungskraftmaschine (VKM), ein Stufengetriebe (SG), ein Achsantriebsgetriebe (HAD), mindestens eine elektrische Maschine ($EM_1$; $EM_1,EM_2$), mindestens eine Kupplung ($K_j$) und mindestens einen Energiespeicher (ES), und mindestens eine angetriebene Achse (HA;VA; HA,VA), wobei

   a) ausgehend vom Fahrerwunsch (FW) und vom Betriebszustand entschieden wird, welche Modi (AMK) möglich sind,
   b) ausgehend von den Fahrerwunsch (FW), den Betriebszustand des Kraftfahrzeuges und den Systemzustand (SZA) beschreibenden Daten zumindest ein dem Fahrerwunsch (FW) entsprechendes erforderliches Drehmoment berechnet wird,
   c) anhand dieses zumindest einen Drehmomentes und den Betriebszustand des Kraftfahrzeuges und den Systemzustand (SZA) beschreibenden Daten aus allen möglichen Moden die in Frage kommenden Moden (AMGK) und Getriebestufen (G) ermittelt werden,
   d) für diese in Frage kommenden Moden (AMGK) dem Fahrerwunsch (FW) entsprechende optimale Arbeitspunkte (AP) der in den einzelnen jeweiligen Moden einbezogenen Komponenten unter Berücksichtigung von Betriebszustand und Systemzustand (SZA) ermittelt werden,
   e) sodann die Moden (AMGK) bewertet werden, wobei der Gesamtwirkungsgrad eines einer Anzahl von Bewertungskriterien ist, und der am günstigsten bewertete Modus (AMK*) ausgewählt wird,
   f) schließlich die den Arbeitspunkten (AP) des ausgewählten Modus (AMK*) entsprechenden Sollwerte beziehungsweise Befehle zur Erfüllung des Fahrerwunsches (FW) für die Einstellung der in dem jeweiligen Modus (AMK*) einbezogenen Komponenten (VKM, $EM_1$, ES; VKM, $EM_1$, $EM_2$, ES) ausgegeben werden.

2. Verfahren nach Anspruch 1, **dadurch gekennzeichnet, dass** im Falle eines Kraftfahrzeuges mit zwei angetriebenen Achsen (HA,VA) zunächst nur das gesamte zu übertragende Drehmoment ($M_{FW}$) berücksichtigt und dessen Verteilung auf die Achsen (HA,VA) berechnet wird, wenn ein Traktionseingriff (TE=1) vorliegt, und erst in einem späteren Schritt berechnet wird, wenn kein Traktionseingriff (TE=0) vorliegt.

3. Verfahren nach Anspruch 1, **dadurch gekennzeichnet, dass** zur Berechnung der optimalen Wirkungsgrade ($\eta_{VKM}$, $\eta_{EM1}$, $\eta_{EM2}$) und Arbeitspunkte (AP) der in Frage kommenden Moden (AMGK) zunächst für jede Getriebestuefe (G) unter Berücksichtigung der mechanischen Auslegung und der Übersetzungen ($Ü_{SG}$, $Ü_{VAD}$, $Ü_{HAD}$) die Grenzwerte des maximalen Momentes einzelner Maschinen (VKM,EM1,EM2) berechnet wird, dann für alle Moden (AMGK) die optimalen Arbeitspunkte (AP) der einzelnen Maschinen (VKM, EM1, EM2) unter Berücksichtigung von Grenzwerten ermittelt werden, und

für diese Arbeitspunkte (AP) die einzelnen Wirkungsgrade ($\eta_{VKM}$, $\eta_{EM1}$, $\eta_{EM2}$) und in der Folge daraus die Gesamtwirkungsgrade ($\eta_{AMGK}$) für alle in Frage kommenden Moden ermittelt werden.

4. Verfahren nach Anspruch 1, **dadurch gekennzeichnet, dass** die Grenzwerte für die Ermittlung des optimalen Arbeitspunktes (AP) der einzelnen Komponenten (VKM, EM1, EM2, ES) Grenzwerte der Leistung ($P_{max}$) der einzelnen Komponenten (VKM, EM1, EM2, ES) sind, die aus dem thermischen Zustand und aus Kennfeldern der jeweiligen motorischen Komponenten (VKM, EM1, EM2) ermittelt werden.

5. Verfahren nach Anspruch 1, **dadurch gekennzeichnet, dass** die Grenzwerte für die Ermittlung des Arbeitspunktes (AP) der einzelnen Komponenten (VKM, EM1, EM2) Grenzwerte der Leistungsaufnahmefähigkeit ($P_{ESmaxladen}$) des Energiespeichers (ES) in ihrem aktuellen Ladezustand sind.

6. Verfahren nach Anspruch 1, **dadurch gekennzeichnet, dass** in die Bewertung der Moden (AMGK) die Bewertung die Lage der Arbeitspunkte (AP) in den Kennfeldern der einzelnen Komponenten einbezogen wird.

7. Verfahren nach Anspruch 1, **dadurch gekennzeichnet, dass** in deren Schritt c) sämtliche Bewertungen der einzelnen Modi (AMK; AMGK) zusammengeführt und die Modi (AMK; AMGK) nach der Größe des Bewertungsresultates sortiert und der Modus (AMK*; AMGK*) mit der höchsten Bewertung ausgewählt wird.

8. Verfahren nach Anspruch 1, **dadurch gekennzeichnet, dass** die Sollwerte beziehungsweise Befehle für die Einstellung der von dem ausgewählten Modus (AMK*; AMGK*) betroffenen Komponenten für den ausgewählten Modus (AMK*; AMGK*) die der Berechnung der Wirkungsgrade ($\eta_{VKM}$, $\eta_{EM1}$, $\eta_{EM2}$) zugrunde liegenden und unter Berücksichtigung von Betriebszustand und Systemzustand (SZA) für den jeweiligen Modus ermittelten Werte im Arbeitspunkt (AP) sind.

9. Steuersystem für ein Kraftfahrzeug mit Hybridantrieb, welcher aus folgenden Komponenten besteht: einer Verbrennungskraftmaschine (VKM), einem Stufengetriebe (SG), mindestens einem Achsantriebsgetriebe (HAD; VAD; VAD, HAD), mindestens einer elektrischen Maschine ($EM_i$), mindestens einer Kupplung ($K_j$), einem Energiespeicher (ES) und mindestens einer angetriebenen Achse (HA; VA; HA,VA), wobei eine Fahrerwunschauswertung (FW) aus der Fahrpedalstellung, der Bremspedalstellung und einer Raddrehzahl den vom Fahrer zu erreichen gewünschten Betriebszustand (Beschleunigung, Verzögerung, Kickdown, etc) erkennt, und ein Hybridregler die an den Komponenten einzustellenden Sollwerte beziehungsweise Befehle ermittelt, und ein Momentenkoordinator (M16) die Sollwerte und Befehle für die Ansteuerung der Komponenten diesen zuordnet und sie in Stellgrößen für deren Steuerung übersetzt wobei der Hybridregler (HCU) umfasst:

   a) Einen Modul Systemzustandsanalyse (SZA) (M1), der mit den Betriebszustand beschreibenden aktuellen Größen ($v_{Fahrzeug}$, $T_{VKM}$, etc) Vorberechnungen anstellt und deren Resultate ($\omega_{VKM}$, $\omega_{EMi}$, $Flag_{Anfahren}$, $Flag_{Bremsen}$) bereithält,
   b) Einen Fahrdynamikregler (FD), der aus dem Fahrerwunsch (FW) und dem aktuellen Betriebszustand des Fahrzeuges das mindestens eine zur Erfüllung des Fahrerwunsches an der mindestens einen Achse benötigten Drehmomentes ($M_{VA}$; $M_{HA}$; $M_{VA}$, $M_{HA}$) berechnet und bereit gehalten
   c) Eine Anzahl weiterer Moduln, die aus den vom Modul
   Systemzustandsanalyse (SZA) (M1) und vom Fahrdynamikregler (FD) bereit gehaltenen Größen in Frage kommende Moden (AMGK) und optimale Arbeitspunkte (AP) der Komponenten in diesen ermitteln, und nach Bewertung der Moden (AMGK) den günstigsten Modus (AMGK*) auswählen, und die Sollwerte für die optimalen Arbeitspunkte der Komponenten im ausgewählten Modus (AMGK*) generieren.

10. Steuersystem nach Anspruch 9, **dadurch gekennzeichnet, dass** der Modul Systemzustandanalyse (SZA) (M1) aus einer die aktuelle Fahrgeschwindigkeit ($v_{Fahrzeug}$) des Fahrzeuges angebenden Größe und den Getriebeübersetzungen ($Ü_{SGi}$, $Ü_{HAD}$, $Ü_{KT}$, $Ü_{VAD}$) für die in Frage kommenden Moden (AMGK) die gedachten Drehzahlen der einzelnen Maschinen (VKM, EM1, EM2) in den einzelnen Getriebegängen ($G_i$) berechnet.

11. Steuersystem nach Anspruch 9, **dadurch gekennzeichnet, dass** der Hybridregler (HCU) einen Modul Wärmemanagement (M5) enthält, der eingangsseitig mit dem Modul Systemzustandsanalyse (SZA) (M1) verbunden ist und der einen Block (51) umfasst, der die elektrischen Leistungsgrenzen der E-Maschinen ($EM_i$) und die thermisch eingegrenzte Maximalleistung der Verbrennungskraftmaschine (VKM) ermittelt.

12. Steuersystem nach Anspruch 9, **dadurch gekennzeichnet, dass** der Hybridregler (HCU) einen Modul Arbeitspunktoptimierung / Wirkungsgradberechnung (M8) enthält, der aus den beiden Submoduln Arbeitspunktoptimierung (80) und Wirkungsgradberechnung (81) besteht, wobei der erstere (80) eingangsseitig mit den Moduln Dynamikmanagement (M7) und Gangvorwahl (M4) in Verbindung steht und für alle Modi (AMK; AMGK) und die in diesen Modi betroffenen Maschinen (VKM, $EM_1$, $EM_2$) optimale Arbeitspunkte (AP) festlegt.

13. Steuersystem nach Anspruch 9, **dadurch gekennzeichnet, dass** der Hybridregler (HCU) einen Modul Gesamtbewertung (M 12) enthält, der sämtliche Wertnoten ($BF_{wärme}$, $BF_{Dynamik}$, $BF_{SOC}$) zu einer Gesamtwertnote ($BF_{Gesamt}$) zusammenfasst.

## Claims

1. Method for controlling the hybrid drive of a motor vehicle, which hybrid drive comprises the following components: an internal combustion engine (ICE), a multi-step transmission (ST), an axle drive gearing (RAD), at least one electric machine (EM1; EM1, EM2), at least one clutch ($C_j$) and at least one energy store (ES), and at least one driven axle (RA; FA; RA, FA), wherein

   a) it is decided which operating modes (AMK) are possible on the basis of the driver demand (DD) and of the operating state,
   b) at least one required torque corresponding to the driver demand (DD) is calculated on the basis of data that describes the driver demand (DD), the operating state of the motor vehicle and the system state (SSA),
   c) on the basis of said data, which describes at least one torque and the operating state of the motor vehicle and the system state (SSA), from all possible modes, the suitable modes (AMGK) and transmission stages (G) are determined,
   d) for said suitable modes (AMGK), optimum operating points (OP), which correspond to the driver demand (DD), of the components involved in the individual respective modes are determined taking into consideration the operating state and system state (SSA),
   e) then the modes (AMGK) are evaluated, with the overall efficiency being one of a number of evaluation criteria, and the mode (AMK*) that is evaluated as being the most favorable is selected,
   f) finally, the nominal values or commands, which correspond to the operating points (OP) of the selected mode (AMK*), for fulfilling the driver demand (DD) are output for the adjustment of the components (ICE, EM1, ES; ICE, EM1, EM2, ES) involved in the respective mode (AMK*).

2. Method according to Claim 1, **characterized in that**, in the case of a motor vehicle having two driven axles (RA, FA), firstly only the entire torque to be transmitted ($M_{DD}$) is taken into consideration and the distribution thereof between the axles (RA, FA) is calculated if a traction intervention (TI=1) is present, and is calculated only in a later step if no traction intervention (TI=O) is present.

3. Method according to Claim 1, **characterized in that** for the calculation of the optimum efficiencies ($\eta_{ICE}$, $\eta_{EM1}$, $\eta_{EM2}$) and operating points (OP) of the suitable modes (AMGK), firstly, for each gear stage (G) taking into consideration the mechanical configuration and the transmission ratios ($\ddot{U}_{ST}$, $\ddot{U}_{FAD}$, $\ddot{U}_{RAD}$) the limit values of the maximum torque of individual machines (ICE, EM1, EM2) is calculated, then, for all the modes (AMGK), the optimum operating points (OP) of the individual machines (ICE, EM1, EM2) are determined taking into consideration limit values, and for said operating points (OP), the individual efficiencies ($\eta_{ICE}$, $\eta_{EM1}$, $\eta_{EM2}$) are determined, and from these, the overall efficiencies ($\eta_{AMK}$) for all the suitable modes are determined.

4. Method according to Claim 1, **characterized in that** the limit values for the determination of the optimum operating point (OP) of the individual components (ICE, EM1, EM2, ES) are limit values of the power ($P_{max}$) of the individual components (ICE, EM1, EM2, ES) that are determined from the thermal state and from characteristic maps of the respective motor components (ICE, EM1, EM2).

5. Method according to Claim 1, **characterized in that** the limit values for the determination of the operating point (OP) of the individual components (ICE, EM1, EM2) are limit values of the power input capacity ($P_{ESmax-charged}$) of the energy store (ES) in its present charging state.

6. Method according to Claim 1, **characterized in that** the position of the operating points (OP) in the characteristic maps of the individual components is taken into consideration in the evaluation of the modes (AMK; AMGK).

7. Method according to Claim 1, **characterized in that**, in step c) thereof, all the evaluations of the individual modes (AMK; AMGK) are merged and the modes (AMK; AMGK) are sorted according to the magnitude of the evaluation result and the mode (AMK*; AMGK*) with the highest evaluation is selected.

8. Method according to Claim 1, **characterized in that** the nominal values or commands for the adjustment of the components involved in the selected mode (AMK*; AMGK*) for the selected mode (AMK*; AMGK*) are the values, which form the basis of the calculation of the efficiencies ($\eta_{ICE}$, $\eta_{EM1}$, $\eta_{EM2}$) and which are determined taking into consideration the operating state and system state (SSA) for the respective mode, at the operating point (OP).

9. Control system for a motor vehicle with a hybrid drive which is composed of the following components: an internal combustion engine (ICE), a multi-step transmission (ST), at least one axle drive transmission (RAD; FAD; FAD, RAD), at least one electric machine ($EM_i$), at least one clutch ($C_j$), an energy store (ES) and at least one driven axle (RA; FA; RA, FA), with a driver demand evaluation (DD) detecting, from the throttle pedal position, the brake pedal position and a wheel rotational speed, the operating state (acceleration, deceleration, kickdown, etc.) that the driver wishes to attain, and a hybrid controller determines the nominal values or commands to be set at the components, and a torque coordinator (M16) assigns the nominal values and commands for the activation of the components to said components and converts said nominal values and commands into actuating variables for the control of said components, wherein the hybrid controller (HCU) comprises:

a) a system state analysis module (SSA) (M1) that, with present variables ($V_{Vehicle}$, $T_{ICE}$, etc.) that describe the operating state, carries out preliminary calculations and stores the results thereof ($\omega_{ICE}$, $\omega_{EMi}$, $Flag_{starting}$, $Flag_{Braking}$),
b) a driving dynamics controller (FD) that, from the driver demand (DD) and the present operating state of the vehicle, calculates and stores the at least one torque ($M_{FA}$; $M_{RA}$; $M_{FA}$, $M_{RA}$) that is required at the at least one axle in order to fulfill the driver demand,
c) a number of further modules that, from the variables stored by the system state analysis module (SSA) (M1) and by the driving dynamics controller (FD), determine suitable modes (AMGK) and optimum operating points (OP) of the components in said modes (AMGK), and after the evaluation of the modes (AMGK), select the most favorable mode (AMGK*) and generate the nominal values for the optimum operating points of the components in the selected mode (AMGK*).

10. Control system according to Claim 9, **characterized in that** the system state analysis module (SSA) (M1) calculates, from a value that specifies the present driving speed (vehicle) of the vehicle and from the transmission ratios ($Ü_{STi}$, $Ü_{RAD}$, $Ü_{KT}$, $Ü_{FAD}$), the imaginary rotational speeds of the individual machines (ICE, EM1, EM2) in the individual transmission gears ($G_i$) for the suitable modes (AMGK).

11. Control system according to Claim 9, **characterized in that** the hybrid controller (HCU) comprises a heat management module (M5) that is connected at the input side to the system state analysis module (SSA) (M1) and that comprises a block (51) that determines the electrical power limits of the electric machines ($EM_i$) and the thermally limited maximum power of the internal combustion engine (ICE).

12. Control system according to Claim 9, **characterized in that** the hybrid controller (HCU) comprises an operating point optimization/efficiency calculation module (M8) that is composed of the two sub-modules of operating point optimization (80) and efficiency calculation (81), with the former (80) being connected at the input side to the dynamics management (M7) and gear pre-selection (M4) modules and defining optimum operating points (OP) for all the modes (AMK; AMGK) and the machines (ICE, EM1, EM2) involved in said modes.

13. Control system according to Claim 9, **characterized in that** the hybrid controller (HCU) comprises an overall evaluation module (M12) that merges all the value grades ($BF_{Heat}$, $BF_{Dynamics}$, $BF_{SOC}$) to form an overall value grade ($BF_{Overall}$).

**Revendications**

1. Procédé de commande de l'entraînement hybride d'un véhicule automobile, ledit entraînement hybride comprenant les composants suivants: un moteur à combustion interne (VKM), une transmission à rapports étagés (SG), une transmission d'essieu (HAD), au moins une machine électrique ($EM_1$ ; $EM_1$, $EM_2$), au moins un embrayage ($K_j$), au moins un accumulateur d'énergie (ES), et au moins un essieu entraîné (HA ; VA ; HA, VA), dans lequel :

a) partant d'un souhait du conducteur (FW) et de l'état de fonctionnement, on décide quels modes (AMK) sont possibles,

b) partant de données décrivant le souhait du conducteur (FW), l'état de fonctionnement du véhicule automobile et l'état du système (SZA), au moins un couple requis correspondant au souhait du conducteur (FW) est calculé,

c) à l'aide de cet au moins un couple et des données de tous les modes possibles décrivant l'état de fonctionnement du véhicule automobile et l'état du système (SZA), les modes en question (AMGK) et les rapports de transmission (G) sont déterminés,

d) pour ces modes en question (AMGK), des points de travail optimaux (AP) correspondant au souhait du conducteur (FW) des composants incorporés dans les modes respectifs particuliers sont déterminés en tenant compte de l'état de fonctionnement et de l'état du système (SZA),

e) ensuite les modes (AMGK) sont analysés, le rendement total étant l'un parmi un certain nombre de critères d'analyse, et le mode évalué comme le plus favorable (AMK*) étant choisi,

f) finalement les valeurs de consigne correspondant aux points de travail (AP) du mode choisi (AMK*) ou les ordres de satisfaction du souhait du conducteur (FW) pour l'ajustement des composants incorporés dans le mode respectif (AMK*) (VKM, EM$_1$, ES ; VKM, EM$_1$, EM$_2$, ES) sont émis.

2. Procédé selon la revendication 1, **caractérisé en ce que** dans le cas d'un véhicule automobile avec deux essieux entraînés (HA, VA), d'abord seulement le couple total à transmettre (M$_{FW}$) est pris en compte, et sa répartition sur les essieux (HA, VA) est calculée en présence d'une application de traction (TE=1), et n'est calculée que dans une étape ultérieure en l'absence d'une application de traction (TE=0).

3. Procédé selon la revendication 1, **caractérisé en ce que** pour le calcul du rendement optimal ($\eta_{VKM}$, $\eta_{EM1}$, $\eta_{EM2}$) et des points de travail (AP) des modes en question (AMGK), on calcule tout d'abord pour chaque rapport de transmission (G), en tenant compte de la conception mécanique et des démultiplications (Ü$_{SG}$, Ü$_{VAD}$, Ü$_{HAD}$), les valeurs limites du couple maximal de machines individuelles (VKM, EM1, EM2), ensuite, pour tous les modes (AMGK), les points de travail optimaux (AP) des machines individuelles (VKM, EM1, EM2) sont déterminés en tenant compte de valeurs limites, et

pour ces points de travail (AP), les rendements individuels ($\eta_{VKM}$, $\eta_{EM1}$, $\eta_{EM2}$), et par conséquent les rendements totaux ($\eta_{AMGK}$) sont déterminés pour tous les modes en question.

4. Procédé selon la revendication 1, **caractérisé en ce que** les valeurs limites pour la détermination du point de travail optimal (AP) des composants individuels (VKM, EM1, EM2, ES) sont des valeurs limites de la puissance (P$_{max}$) des composants individuels (VKM, EM1, EM2, ES), qui sont déterminées à partir de l'état thermique et des champs caractéristiques des composants respectifs du moteur (VKM, EM1, EM2).

5. Procédé selon la revendication 1, **caractérisé en ce que** les valeurs limites pour la détermination du point de travail (AP) des composants individuels (VKM, EM1, EM2) sont des valeurs limites de la capacité d'absorption de puissance (P$_{ESmaxladen}$) de l'accumulateur d'énergie (ES) dans son état de charge actuel.

6. Procédé selon la revendication 1, **caractérisé en ce que** l'évaluation de la position des points de travail (AP) dans les champs caractéristiques des composants individuels est prise en compte dans l'évaluation des modes (AMGK).

7. Procédé selon la revendication 1, **caractérisé en ce que** dans son étape c), toutes les évaluations des modes individuels (AMK ; AMGK) sont réunies et les modes (AMK ; AMGK) sont classés en fonction de la grandeur du résultat de l'évaluation et le mode (AMK* ; AMGK*) ayant la plus grande évaluation est choisi.

8. Procédé selon la revendication 1, **caractérisé en ce que** les valeurs de consigne ou les ordres pour l'ajustement au mode choisi (AMK* ; AMGK*) des composants concernés par le mode choisi (AMK* ; AMGK*) sont les valeurs prises pour base pour le calcul des rendements ($\eta_{VKM}$, $\eta_{EM1}$, $\eta_{EM2}$) et déterminées en tenant compte de l'état de fonctionnement et de l'état du système (SZA) pour chaque mode respectif au point de travail (AP).

9. Système de commande pour un véhicule automobile à entraînement hybride, qui se compose des éléments suivants : un moteur à combustion interne (VKM), une transmission à rapports étagés (SG), au moins une transmission d'essieu (HAD ; VAD ; VAD, HAD), au moins une machine électrique (EM$_i$), au moins un embrayage (K$_j$), un accumulateur d'énergie (ES) et au moins un essieu entraîné (HA ; VA ; HA, VA), dans lequel une analyse du souhait du conducteur (FW) reconnaît, à partir de la position de la pédale d'accélération, de la position de la pédale de frein et d'une vitesse de rotation des roues, l'état de fonctionnement (accélération, ralentissement, pied au plancher, etc.) que le conducteur souhaite obtenir, et un régulateur hybride détermine les valeurs de consigne à ajuster sur les composants ou les ordres, et un coordinateur de couple (M16) affecte les valeurs de consigne et les ordres pour la commande des composants à ces derniers, et les convertit en valeurs de réglage pour leur commande, le régulateur hybride (HCU) comprenant :

a) un module d'analyse d'état du système (SZA) (M1), qui effectue des calculs préalables avec des grandeurs actuelles ($V_{Fahrzeug}$, $T_{VKM}$, etc.) décrivant l'état de fonctionnement, et fournit leurs résultats ($\omega_{VKM}$, $\omega_{EMi}$, Flag$_{Anfahren}$, Flag$_{Bremsen}$),

b) un régulateur de dynamique de conduite (FD), qui, à partir du souhait du conducteur (FW) et de l'état de fonctionnement actuel du véhicule, calcule et fournit l'au moins un couple ($M_{VA}$ ; $M_{HA}$ ; $M_{VA}$, $M_{HA}$) à l'au moins un essieu requis pour satisfaire le souhait du conducteur,

c) une pluralité de modules supplémentaires, qui, à partir des grandeurs fournies par le module d'analyse d'état du système (SZA) (M1) et par le régulateur de dynamique de conduite (FD), déterminent les modes en question (AMGK) et les points de travail optimaux (AP) des composants dans ces derniers, et en fonction de l'évaluation des modes (AMGK) sélectionnent le mode le plus favorable (AMGK*), et génèrent les valeurs de consigne pour les points de travail optimaux des composants dans le mode sélectionné (AMGK*).

10. Système de commande selon la revendication 9, **caractérisé en ce que** le module d'analyse d'état du système (SZA) (M1) calcule, à partir d'une grandeur indiquant la vitesse de conduite actuelle ($V_{Fahrzeug}$) du véhicule et des démultiplications de la transmission ($Ü_{SGi}$, $Ü_{HAD}$, $Ü_{KT}$, $U_{VADA}$) pour les modes en question (AMGK), les régimes théoriques pour les machines (VKM, EM1, EM2) dans les rapports de transmission individuels ($G_i$).

11. Système de commande selon la revendication 9, **caractérisé en ce que** le régulateur hybride (HCU) contient un module de gestion de température (M5), qui est connecté du côté de l'entrée au module d'analyse d'état du système (SZA) (M1) et qui comprend un bloc (51), qui détermine les limites de puissance électriques des machines électriques ($EM_i$) et la puissance maximale limitée thermiquement du moteur à combustion interne (VKM).

12. Système de commande selon la revendication 9, **caractérisé en ce que** le régulateur hybride (HCU) contient un module d'optimisation des points de travail/de calcul de rendement (M8), qui se compose des deux sous-modules d'optimisation des points de travail (80) et de calcul du rendement (81), le premier (80) étant en liaison du côté de l'entrée avec les modules de gestion de dynamique (M7) et de présélection de rapport (M4) et établissant les points de travail optimaux (AP) pour tous les modes (AMK ; AMGK) et les machines (VKM, $EM_1$, $EM_2$) concernées dans ces modes.

13. Système de commande selon la revendication 9, **caractérisé en ce que** le régulateur hybride (HCU) contient un module d'évaluation totale (M12), qui rassemble toutes les notes de valeur ($BF_{Wärme}$, $BF_{Dynamik}$, $BF_{SOC}$) en une note de valeur totale $BF_{Gesamt}$.

VKM    K2  EM1    MABx         K1    SG        ES    HAD

Fig. 1

EP 2 097 304 B1

Fig. 2

| AMK | Beschreibung | Achsmoment | Achse |
|---|---|---|---|
| 1 | Rekuperieren mit EM2; VKM im Schubbetrieb | negativ | Allrad |
| 2 | Schubbetrieb VKM; EM2 an VA gekoppelt | negativ | HA |
| 3 | Rekuperieren mit EM1 und EM2 | negativ | Allrad |
| 6 | Rekuperieren mit EM1; EM2 an VA gekoppelt | negativ | HA |
| 9 | Wahlhebel auf Stellung N (v muss nicht 0 sein) | 0 | - |
| 10 | Elektrisches Fahren mit EM1; EM2 an VA gekoppelt | positiv | HA |
| 13 | Elektrischer Allrad | positiv | Allrad |
| 14 | Rekuperieren mit EM1 und EM2; VKM im Leerlauf | negativ | Allrad |
| 17 | Rekuperieren mit EM1; VKM im Leerlauf; EM2 an VA gekoppelt | negativ | HA |
| 20 | Elektrisches Fahren mit EM1; VKM im Leerlauf; EM2 an VA gekoppelt | positiv | HA |

| Fig. 3a | Fig. 3c |
|---|---|
| Fig. 3b | Fig. 3d |

Fig. 3a

EP 2 097 304 B1

| | | | |
|---|---|---|---|
| 21 | Elektrisches Fahren mit EM2; VKM im Leerlauf; EM1 und VKM gekoppelt | positiv | VA |
| 28 | LPAH; EM2 an VA gekoppelt | positiv | HA |
| 29 | VKM-Fahren; EM2 an VA gekoppelt | positiv | HA |
| 30 | Boosten mit EM1; EM2 an VA gekoppelt | positiv | HA |
| 31 | Elektrisches Fahren mit EM2, Serieller Hybrid | positiv | VA |
| 32 | Allrad, LPAH | positiv | Allrad |
| 33 | Allrad | positiv | Allrad |
| 34 | Allrad, Boosten mit EM1 | positiv | Allrad |
| 35 | Rekuperieren mit EM1; VKM im Schubbetrieb | negativ | HA |
| 36 | Rekuperieren mit EM1 und EM2; VKM im Schubbetrieb | negativ | Allrad |

Fig. 3b

EP 2 097 304 B1

| Momente | | | Batterie | Kupplungen | | | | |
|---|---|---|---|---|---|---|---|---|
| VKM | EM1 | EM2 | | K1 | K2 | K3 | K4 | |
| -1 | 0 | -1 | laden | zu | zu | zu | auf | D |
| -1 | 0 | 0 | - | zu | zu | zu | auf | D |
| 0 | -1 | -1 | laden | zu | auf | zu | auf | B |
| 0 | -1 | 0 | laden | zu | auf | zu | auf | B |
| 0 | 0 | 0 | - | zu | zu | auf | auf | A |
| 0 | 1 | 0 | entladen | zu | auf | zu | auf | B |
| 0 | 1 | 1 | entladen | zu | auf | zu | auf | B |
| LL | -1 | -1 | laden | zu | auf | zu | auf | B |
| LL | -1 | 0 | laden | zu | auf | zu | auf | B |
| LL | 1 | 0 | entladen | zu | auf | zu | auf | B |

Fig. 3c

EP 2 097 304 B1

| LL | 0 | 1 | entladen | auf | zu | zu | auf | C |
|---|---|---|---|---|---|---|---|---|
| 1 | -1 | 0 | laden | zu | zu | zu | auf | D |
| 1 | 0 | 0 | - | zu | zu | zu | auf | D |
| 1 | 1 | 0 | entladen | zu | zu | zu | auf | D |
| 1 | -1 | 1 | ent-/laden | auf | zu | zu | auf | C |
| 1 | -1 | 1 | ent-/laden | zu | zu | zu | auf | D |
| 1 | 0 | 1 | entladen | zu | zu | zu | auf | D |
| 1 | 1 | 1 | entladen | zu | zu | zu | auf | D |
| -1 | -1 | 0 | laden | zu | zu | zu | auf | D |
| -1 | -1 | -1 | laden | zu | zu | zu | auf | D |

Fig. 3d

EP 2 097 304 B1

Fig. 4

11 13 16 17 FW FDR HCU MK 15 12 MBAx

10 20

VKM 21 EM1 EM2 22 ES 23 24 25

EP 2 097 304 B1

FDR

FW

M3

28

M4

M6

M5

27

M2

M1

28

M7

M8

Fig. 5

a)

EP 2 097 304 B1

EP 2 097 304 B1

M12    M11    M10    M9

28    M13    M14    M15    M16

b)

Fig. 5

Fig. 6

Fig. 7

M2, 36, 36', 35, 34, FDR

M>0, M<0, M=0, rein VA, rein HA, Allrad

Fig. 8

Fig. 9

EP 2 097 304 B1

Fig. 10

Fig. 11

EP 2 097 304 B1

Fig. 12

Fig. 13

EP 2 097 304 B1

Fig. 14

Fig. 15

105 101 100 103 ES

102 104 106

Fig. 16

EP 2 097 304 B1

Fig. 17

EP 2 097 304 B1

Fig. 18

EP 2 097 304 B1

Fig. 19

Fig. 20

M14

M16

M15

150 151 152 153 154 155

161 160 159 158 157

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6321143 B
- WO 0226520 A1
- DE 10353256 B3
- US 20040060751 A